# EUROPEAN PATENT APPLICATION

(11) **EP 1 878 882 A1**
(43) Date of publication of application: **16.01.2008**
(21) Application number: 06732253.7
(22) Date of filing: 18.04.2006
(51) Int. Cl.: F01L 9/04, F01L 1/02, F01L 1/04

(54) **VALVE MOVING DEVICE FOR INTERNAL COMBUSTION ENGINE**

(30) Priority: 28.04.2005 JP 2005133347; 14.11.2005 JP 2005329111
(71) Applicant: TOYOTA JIDOSHA KABUSHIKI KAISHA, Toyota-shi, Aichi-ken, 471-8571 (JP)
(72) Inventor: EZAKI, Shuichi, Toyota-shi, Aichi 4718571 (JP)
(74) Representative: TBK-Patent
(86) International application number: PCT/JP2006/308495
(87) International publication number: WO 2006/118063

(57) **Abstract**

Disclosed is a valve mechanism 36 for an internal combustion engine that uses a motor to open/close a valve body 32 of each cylinder. The valve mechanism 36 includes a camshaft 60 that is rotated by the motor 50D and equipped with cams 64 for driving the valve body 32 of a plurality of cylinders; control means that drives the motor 50D while making a mode switch between a normal rotation drive mode in which the camshaft 60 is continuously rotated in one direction to drive the valve body 32 and a swing drive mode in which the camshaft 60 is swung to drive the valve body 32; and change means that changes the relative angular positions of cylinder-specific cams 64 on the camshaft 60.

## Description

### Valve Mechanism for Internal Combustion Engine

### Technical Field

The present invention relates to a valve mechanism for an internal combustion engine.

### Background Art

A known technology disclosed, for instance, by JP-A-2004-183610 uses an electric motor to drive an intake valve and an exhaust valve that are provided each cylinder.

A method disclosed, for instance, by JP-A-2005-171937 operates a motor in a swing drive mode, which changes the direction of camshaft rotation during a valve body lift.

The applicant of the present invention has acknowledged that the following documents relate to the present invention:
[Patent Document 1] JP-A-2004-183610
[Patent Document 2] JP-A-2005-171937
[Patent Document 3] JP-A-2004-165704
[Patent Document 4] JP-A-2004-143990

However, when the above conventional technology is used to drive the intake valves or exhaust valves for a plurality of cylinders with one motor, it is necessary to provide a camshaft with a plurality of cylinder cams. If, in this instance, the angular positions of the cams installed to drive different cylinders are close to each other in a situation where the swing drive mode is used to drive the valve body, the camshaft rotation angle becomes unduly large when a switch is made from one cam to another.

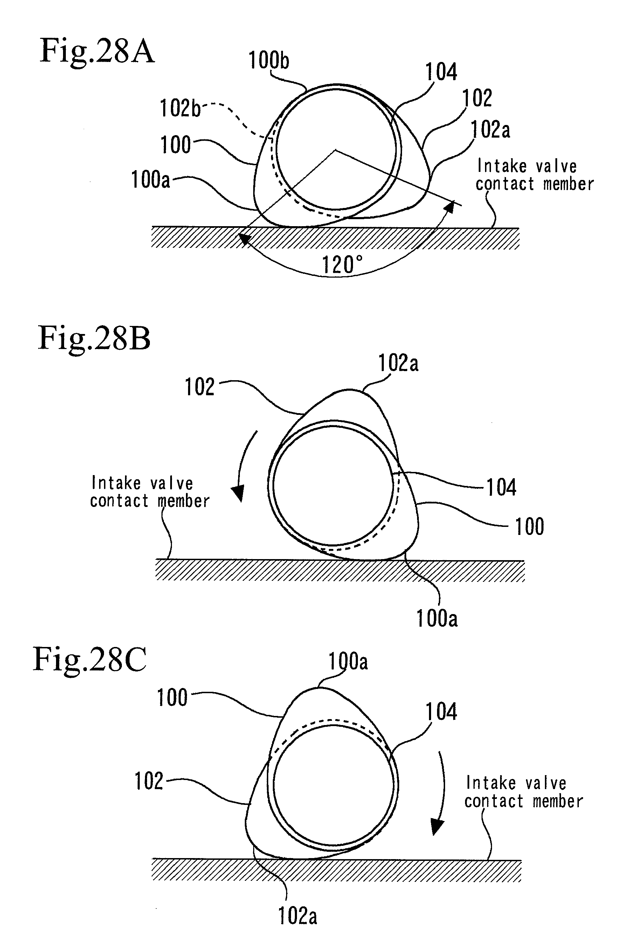

The above problem will now be described in detail with reference to Figs. 28A to 28C. Figs. 28A to 28C are schematic diagrams illustrating two cams 100, 102 that are installed over a camshaft 104. These two cams relate to different cylinders. The cam 100 is formed as a cam whose nose 100a is formed by bulging a part of a circular base circle 100b, which is coaxial with the camshaft 104, outward in radial direction. Similarly, the cam 102 is formed as a cam whose nose 102a is formed by bulging a part of a circular base circle 102b, which is coaxial with the camshaft 104, outward in radial direction. In the cam 100 and cam 102, the cam surfaces (including the nose 100a and nose 102a) other than the surfaces of the base circles 100b, 102b are regarded as cam lift sections.

When the base circles 100b, 102b face contact members (e.g., rocker arm rollers, or lifters provided for the end of the valve body when a direct hit type is employed) on the valve body side, the valve closes as the valve body is brought into close contact with a valve seat by the reaction force of a valve spring. If, on the other hand, the cam lift sections come into contact with the contact members on the valve body side, the cam lift sections push the valve body upward. This causes the valve body to open against the force of the valve spring.

Since intake stroke timing varies from one cylinder to another, the cam 100 and cam 102 are placed at different angular positions as shown in Figs. 28A to 28C. In the examples shown in Figs. 28A to 28C, the cam 100 and cam 102 are positioned in such a manner that the angular position of the nose 100a is 120° apart from that of the nose 102a. The angular positions of the cam 100 and cam 102 are set in accordance with the valve timing of a normal rotation drive mode, which is normally used to rotate the camshaft 104 in one direction.

Fig. 28A shows a case where the cam lift section which is provided from the position of the nose 100a toward the nose 102a is used to open/close the valve body when the cam 100 drives the valve body by swinging. In this instance, the cam lift section angular range of the cam 100 partly overlaps with that of the cam 102. Therefore, the cam 100 drives the valve body of one cylinder while the cam 102 drives the valve body of the other cylinder. This makes it practically impossible to provide independent control over the phase (lift timing) and operating angle of the valve body of each cylinder.

Therefore, when the cam 100 swings the valve body, it is necessary, as shown in Fig. 28B, to open/close the valve body by using the base circle 100b and the cam lift section that is positioned toward the nose 102a and opposite the nose 100a. Similarly, when the cam 102 swings the valve body, it is necessary, as shown in Fig. 28C, to open/close the valve body by using the base circle 102b and the cam lift section that is positioned toward the nose 100a and opposite the nose 102a.

In the swing drive mode, however, it is necessary to drive one cylinder with the cam 100 in a state shown in Fig. 28B, rotate the camshaft 104 in the direction of the arrow in Fig. 28B, and set the position of the cam 102 as indicated in Fig. 28C. As a result, the rotation amount of the camshaft 104 becomes unduly large. If the camshaft 104 is rotated in a direction opposite to the direction of the arrow in Fig. 28B in order to reduce the rotation amount of the camshaft 104, the cam lift sections of the cam 100 and cam 102 overlap with each other. This makes it impossible to achieve a desired valve lift because the valve bodies of both cylinders are driven.

As described above, when the valve body to be driven is to be changed in the swing drive mode, the camshaft 104 cannot be rotated in a direction that represents the minimum distance between the nose 100a and nose 102a, and needs to be rotated greatly in the opposite direction. Further, the amount of such rotation increases when the angular position of the cam 100 becomes closer to that of the cam 102.

A switch from the state shown in Fig. 28B to the state shown in Fig. 28C needs to be made instantaneously in accordance with intake stroke timing. Therefore, if the camshaft rotation angle for the switch increases, it is necessary to increase the camshaft rotation speed. This increases the power consumption of a motor. Further, if the power consumption of the motor increases, the output decreases due to heat generated by the motor.

When a single camshaft is provided with a plurality of cylinder cams, the relative angular positions of the cams become closer to each other with an increase in the number of internal combustion engine cylinders. This increases the camshaft rotation angle for changing the valve body to be swung, thereby further increasing the power consumption of the motor.

Furthermore, a fuel injection stop operation (fuel cut-off) is recently performed, for instance, to achieve increased fuel efficiency at the time of vehicle deceleration. In addition, cylinder cut-off operations are conducted by using a reduced number of cylinders for combustion depending on the operating state in a situation where the internal combustion engine has a plurality of cylinders. When control is exercised to halt the operations of all cylinders or some cylinders in a situation where a plurality of cylinder valve bodies are motor-driven, it is difficult to stop a particular cylinder valve body at a particular position because the camshaft is provided with cams that drive the valve bodies of a plurality of cylinders. This not only limits the degree of freedom in conducting an operation with all cylinders stopped or with some cylinders stopped, but also limits the degree of freedom in exercising valve close control to minimize or avoid catalyst deterioration during fuel cut-off.

### Disclosure of Invention

The present invention has been made to solve the above problems. An object of the present invention is to provide optimum control by increasing the degree of freedom in controlling the valve body of each cylinder within a configuration in which a single camshaft includes cams for driving the valve bodies of a plurality of cylinders.

The first aspect of the present invention is a valve mechanism for an internal combustion engine that uses a motor to drive for opening/closing a valve body of each cylinder, the valve mechanism comprising: a camshaft that is rotated by the motor and equipped with a plurality of cams for driving the valve body of a plurality of cylinders; and cam angle change means for changing the relative angle between the plurality of cams that are driven by the same motor.

The second aspect of the present invention is the valve mechanism according to the first aspect of the present invention, further comprising: control means that drives the motor while making a mode switch between a normal rotation drive mode in which the camshaft is continuously rotated in one direction to drive the valve body and a swing drive mode in which the camshaft is swung to drive the valve body, wherein the cam angle change means changes the relative angular positions of the cams when a mode switch is made.

The third aspect of the present invention is the valve mechanism according to the second aspect of the present invention, wherein the camshaft has the cams for driving the valve bodies of two cylinders and is formed by combining a first camshaft; which has a cam for one cylinder, and a second camshaft, which has a cam for the other cylinder; and wherein the cam angle change means changes the relative angular positions of the cam on the first camshaft and the cam on the second camshaft by changing the relative angular positions of the first camshaft and the second camshaft.

The fourth aspect of the present invention is the valve mechanism according to the third aspect of the present invention, further comprising: angle lock means that is provided at a junction between the first camshaft and the second camshaft to lock the relative angular positions of the first camshaft and the second camshaft in the normal rotation drive mode and in the swing drive mode, respectively.

The fifth aspect of the present invention is the valve mechanism according to the fourth aspect of the present invention, wherein the angle lock means includes a lock pin, which is provided for one of the first camshaft and the second camshaft, and a first engagement hole and a second engagement hole, which are made in the other of the first camshaft and the second camshaft to engage with the lock pin; wherein, in the normal rotation drive mode, the lock pin engages with the first engagement hole to lock the relative angular positions of the first camshaft and the second camshaft; and wherein, in the swing drive mode, the lock pin engages with the second engagement hole to lock the relative angular positions of the first camshaft and the second camshaft.

The sixth aspect of the present invention is the valve mechanism according to fifth aspect of the present invention, further comprising: lock pin disengagement means that supplies oil to the first or second engagement hole to disengage the lock pin from the first or second engagement hole, wherein the lock pin disengagement means includes an oil path that communicates with either the first engagement hole or the second engagement hole in accordance with the relative angular positions of the first camshaft and the second camshaft; wherein, in the normal rotation drive mode, the oil path communicates with only the first engagement hole, and when a mode switch is to be made to the swing drive mode, oil is supplied to the oil path to disengage the lock pin from the first engagement hole; and wherein, in the swing drive mode, the oil path communicates with only the second engagement hole, and when a mode switch is to be made to the normal rotation drive mode, oil is supplied to the oil path to disengage the lock pin from the second engagement hole.

The seventh aspect of the present invention is the valve mechanism according to any one of the second to sixth aspects of the present invention, wherein the valve body is an intake valve, and when a mode switch is made from the normal rotation drive mode to the swing drive mode, the valve opening timing of the valve body retards.

The eighth aspect of the present invention is the valve mechanism according to any one of the second to sixth aspects of the present invention, wherein the valve body is an exhaust valve, and when a mode switch is made from the normal rotation drive mode to the swing drive mode, the valve opening timing of the valve body advances.

The ninth aspect of the present invention is the valve mechanism according to any one of the second to eighth aspects of the present invention, further comprising: a hydraulic lash adjuster for adjusting the clearance between the valve body and the cam.

The tenth aspect of the present invention is the valve mechanism according to the ninth aspect of the present invention, further comprising: a rocker arm for transmitting the acting force of the cam to the valve body.

The eleventh aspect of the present invention is the valve mechanism according to any one of the second to tenth aspects of the present invention, wherein the motor is positioned at a longitudinal end of the camshaft.

The twelfth aspect of the present invention is the valve mechanism according to any one of the second to tenth aspects of the present invention, wherein the motor is positioned above the camshaft.

The thirteenth aspect of the present invention is the valve mechanism according to the first aspect of the present invention, wherein the internal combustion engine performs a fuel cut-off operation at the time of vehicle deceleration; and wherein, when the fuel cut-off operation is performed, the cam angle change means changes the relative angular positions of the cams so as to close the valve bodies of all cylinders.

The fourteenth aspects of the present invention is the valve mechanism according to the thirteenth aspect of the present invention, wherein the camshaft includes an intake valve camshaft for driving intake valves and an exhaust valve camshaft for driving exhaust valves; and wherein, when the fuel cut-off operation is performed, the cam angle change means changes the relative angular positions of the cams on at least either the intake valve camshaft or the exhaust valve camshaft so as to close the valve bodies of all cylinders.

The fifteenth aspect of the present invention is the valve mechanism according to the fourteenth aspect of the present invention, wherein, when the fuel cut-off operation is performed, the cam angle change means changes the relative angular positions of the cams on one of the intake valve camshaft and the exhaust valve camshaft so as to close the valve bodies of all cylinders and changes the relative angular positions of the cams on the other of the intake valve camshaft and the exhaust valve camshaft so as to open only the valve bodies of some of the all cylinders.

The sixteenth aspect of the present invention is the valve mechanism according to the fifteenth aspect of the present invention, wherein, when the fuel cut-off operation is performed, the cam angle change means changes the relative angular positions of the cams on the exhaust valve camshaft so as to close the valve bodies of all cylinders and changes the relative angular positions of the cams on the intake valve camshaft so as to open only the valve bodies of some of the all cylinders.

The seventeenth aspect of the present invention is the valve mechanism according to the fifteenth or sixteenth aspect of the present invention, wherein the some of the all cylinders are two cylinders in which pistons move in opposite directions.

The eighteenth aspect of the present invention is the valve mechanism according to the fifteenth or sixteenth aspect of the present invention, wherein the some of the all cylinders are two cylinders that are 180 crank angle degrees out of phase with each other.

The nineteenth aspect of the present invention is the valve mechanism according to the seventeenth or eighteenth aspect of the present invention, wherein the cam angle change means changes the relative angular positions of the cams so that the two cylinders open the valve bodies by the same amount.

The twentieth aspect of the present invention is the valve mechanism according to any one of the fifteenth to nineteenth aspects of the present invention, wherein the cam angle change means changes the amount of valve body opening in accordance with a requested vehicle speed level of a vehicle in which the internal combustion engine is mounted.

According to the first aspect of the present invention, the relative positions of the plurality of cams driven by the same motor can be changed to increase the degree of freedom in driving the valve body. Therefore, control can be exercised, for instance, to close the valve bodies of all cylinders or open the valve bodies of some cylinders. Consequently, the open/close status of the valve bodies can be optimally controlled.

According to the second aspect of the present invention, the relative positions of the cams for various cylinders can be changed when a mode switch is made between the normal rotation drive mode and swing mode. Therefore, the relative angular positions of the cams of various cylinders can be set apart from each other in the swing drive mode. This makes it possible to minimize the camshaft rotation angle when the valve body to be driven is changed in the swing drive mode.

According to the third aspect of the present invention, the camshaft has cams for driving the valve bodies of two cylinders. The camshaft is formed by combining the first camshaft, which has a cam for one cylinder, with the second camshaft, which has a cam for the other cylinder. Therefore, the relative angular positions of the cams for two cylinders can be changed by changing the relative angular positions of the first and second camshafts.

According to the fourth aspect of the present invention, the relative angular positions of the first and second camshafts can be locked in the normal rotation drive mode and swing drive mode. Therefore, the motor can be driven in the normal rotation drive mode or swing drive mode while the relative angular positions of the cams for two cylinders are locked.

According to the fifth aspect of the present invention, the relative angular positions of the first and second camshafts can be locked by engaging the lock pin with the first or second engagement hole. Further, the lock pin engages with the first engagement hole in the normal rotation drive mode and engages with the second engagement hole in the swing drive mode. Therefore, the camshaft can be driven while the relative angular positions of the first and second camshafts are locked in both modes.

According to the sixth aspect of the present invention, the oil path communicates only with the first engagement hole in the normal rotation drive mode in which the lock pin is engaged with the first engagement pin, and communicates only with the second engagement hole in the swing drive mode in which the lock pin is engaged with the second engagement pin. Therefore, when the lock pin is to be disengaged, oil can be supplied only to the engagement hole with which the lock pin is engaged. This makes it possible to prevent the oil from flowing out of the engagement hole with which the lock pin is not engaged, and properly avoid an oil pressure decrease at the time of lock pin disengagement.

According to the seventh aspect of the present invention, the intake valve opening timing retards when a mode switch is made from the normal rotation drive mode to the swing drive mode. Therefore, the intake valve opening timing can set apart from the top dead center of a piston. This makes it possible to properly avoid a collision between the intake valve and piston.

According to the eighth aspect of the present invention, the exhaust valve opening timing advances when a mode switch is made from the normal rotation drive mode to the swing drive mode. Therefore, the exhaust valve opening timing can set apart from the top dead center of the piston. This makes it possible to properly avoid a collision between the exhaust valve and piston.

According to the ninth aspect of the present invention, the hydraulic lash adjuster is included and used to adjust the clearance between the valve body and cam. Therefore, the clearance between the valve body and cam can be minimized. This eliminates the need for a preparatory zone for allowing the cam to lift the valve body, and decreases the phase angle of the cam for a valve body lift. Consequently, the motor speed for swing drive can be reduced to minimize the power consumption of the motor.

According to the tenth aspect of the present invention, the rocker arm is included and used to transmit the cam's acting force to the valve body. Therefore, when the hydraulic lash adjuster is installed, the inertia for valve body operation can be reduced. This makes it possible to reduce the drive load on the motor.

According to the eleventh aspect of the present invention, the motor is positioned at the longitudinal end of the camshaft. This makes it possible to reduce the vertical space for the valve mechanism and suppress the height of the internal combustion engine. Since the internal combustion engine is mounted in a vehicle in an inclined position particularly when the vehicle is of a front-engine front-drive type, mountability in an engine room can be enhanced by suppressing the height of the internal combustion engine.

According to the twelfth aspect of the present invention, the motor is positioned above the camshaft to reduce the longitudinal camshaft space for the valve mechanism and suppress the overall length of the internal combustion engine. Since the internal combustion engine is longitudinally mounted in the vehicle particularly when the vehicle is of a front-engine rear-drive type, the overall length is suppressed to provide enhanced mountability in the engine room. Further, the internal combustion engine can be positioned toward the center of the vehicle to provide increased vehicle maneuver stability.

According to the thirteenth aspect of the present invention, the relative angular positions of the cams are changed so as to close the valve bodies of all cylinders when a fuel cut-off operation is performed. Therefore, the air flow to an exhaust path can be stopped. This makes it possible to suppress the outflow of oxygen to a catalyst and deter catalyst deterioration.

According to the fourteenth aspect of the present invention, at least either the intake valve camshaft or the exhaust valve camshaft can close the valve bodies of all cylinders. This makes it possible to shut off the air flow to the exhaust path.

According to the fifteenth aspect of the present invention, at least either the intake valve camshaft or the exhaust valve camshaft closes the valve bodies of all cylinders while the other camshaft changes the relative angular positions of the cams so as to open only the valve bodies of particular cylinders. Therefore, it is possible to deliver gas to and discharge the gas out of the particular cylinders. This makes it possible to perform pumping work and apply the engine brake.

According to the sixteenth aspect of the present invention, the exhaust valve camshaft can close the valve bodies of all cylinders and shut off the air flow to the exhaust path. Further, the intake valve camshaft changes the relative angular positions of the cams so as to open only the valve bodies of particular cylinders. Consequently, the gas can be transferred between the particular cylinders and an intake path. This makes it possible to perform pumping work and apply the engine brake.

The seventeenth aspect of the present invention opens only the valve bodies of two cylinders whose pistons move in opposite directions. Therefore, the gas discharged out of one cylinder can be taken into the other cylinder. In this manner, the gas can be exchanged between the two cylinders.

The eighteenth aspect of the present invention opens only the valve bodies of two cylinders that are 180 crank angle degrees out of phase with each other. Therefore, the gas discharged out of one cylinder can be taken into the other cylinder. In this manner, the gas can be exchanged between the two cylinders.

According to the nineteenth aspect of the present invention, two cylinders open the valve bodies by the same amount. Therefore, when the gas is exchanged between the two cylinders, a proper amount of gas can be delivered from one cylinder to the other. This makes it possible to avoid the presence of extra gas in a gas path and prevent the generation of an unnecessary negative pressure.

According to the twentieth aspect of the present invention, the amount of valve body opening changes in accordance with the requested vehicle speed level of the vehicle in which the internal combustion engine is mounted. Consequently, engine braking force can be controlled in accordance with the requested vehicle speed level.

### Brief Description of Drawings

Fig. 1 is a schematic diagram illustrating the configuration of a system that includes an internal combustion engine valve mechanism according to each embodiment of the present invention.
Fig. 2 is a schematic diagram illustrating the configuration of a section around an intake valve and valve mechanism according to a first embodiment.
Figs. 3A and 3B are schematic diagrams illustrating how a cam drives the intake valve.
Fig. 4 is a schematic diagram illustrating the relationship among internal combustion engine speed, output torque, and cam drive mode.
Fig. 5 is a schematic diagram illustrating in detail the configuration of a camshaft that drives the intake valves of the fourth and sixth cylinders in accordance with the first embodiment.
Figs. 6A and 6B are schematic diagrams illustrating the end faces of flange sections on the camshaft.
Figs. 7A and 7B are schematic diagrams illustrating the positional relationship between a fourth-cylinder cam and a sixth-cylinder cam, which are mounted on the camshaft.
Fig. 8 is a cross-sectional view that is taken along one-dot chain line I-I' in Fig. 7A.
Fig. 9 is a schematic diagram illustrating a state in which a lock pin is disengaged from a hole by supplying oil to the hole into which the lock pin is inserted.
Figs. 10A and 10B are cross-sectional views that are taken along one-dot chain line II-II' in Fig. 8.
Fig. 11 is a schematic diagram illustrating the configuration of a section around an intake valve and valve mechanism according to a second embodiment.
Fig. 12 is a schematic diagram illustrating in detail the configuration of a camshaft that drives the intake valves of the fifth and seventh cylinders in accordance with the second embodiment.
Figs. 13A and 13B are schematic diagrams illustrating the end face of a flange section on the camshaft.
Figs. 14A and 14B are schematic diagrams illustrating the positional relationship between a fifth-cylinder cam and a seventh-cylinder cam, which are mounted on the camshaft.
Figs. 15A and 15B are cross-sectional views illustrating a thrust position at which oil paths are provided, like Figs. 10A and 10B.
Fig. 16 is a schematic diagram illustrating the relationship between the lift amounts and crank angles of the intake valve and exhaust valve.
Fig. 17 is a schematic diagram illustrating an example in which a hydraulic lash adjuster is positioned at the supporting point of a rocker arm.
Fig. 18 is a schematic diagram illustrating an example in which a valve mechanism motor is positioned above the camshaft.
Figs. 19A and 19B are schematic diagrams illustrating examples in which the relative angle between the seventh-cylinder cam 64 and fifth-cylinder cam, which are shown in Fig. 14B, is smaller than 180°.
Figs. 20A and 20B are schematic diagrams illustrating intake valve/exhaust valve control that is exercised in accordance with a third embodiment.
Fig. 21 is a schematic diagram illustrating the configuration of a section around the valve mechanism that drives exhaust valves in accordance with the third embodiment.
Fig. 22 is a schematic diagram illustrating in detail the configuration of a camshaft that drives the exhaust valve in accordance with the third embodiment.
Figs. 23A and 23B are schematic diagrams illustrating the end face of a flange section on a camshaft that drives the exhaust valve in accordance with the third embodiment.
Figs. 24A and 24B are schematic diagrams illustrating the positional relationship among the cams on a camshaft that drives the exhaust valve in accordance with the third embodiment.
Fig. 25 is a schematic diagram illustrating the configuration of a section around the valve mechanism that drives intake valves in accordance with the third embodiment.
Fig. 26 is a schematic diagram illustrating an operation that is performed to exchange gas between the first and second cylinders in accordance with the third embodiment.
Fig. 27 is a timing diagram illustrating intake valve/exhaust valve control that is exercised in accordance with the third embodiment.
Figs. 28A, 28B, and 28C are schematic diagrams illustrating adverse effects that may be produced when cams for a plurality of cylinders are mounted on a single camshaft.

### Best Mode of Carrying Out the Invention

Embodiments of the present invention will now be described with reference to the accompanying drawings. Elements common to the drawings are identified by the same reference numerals and will not be described repeatedly. The embodiments described below are merely illustrative of the present invention and do not limit the scope of the present invention.

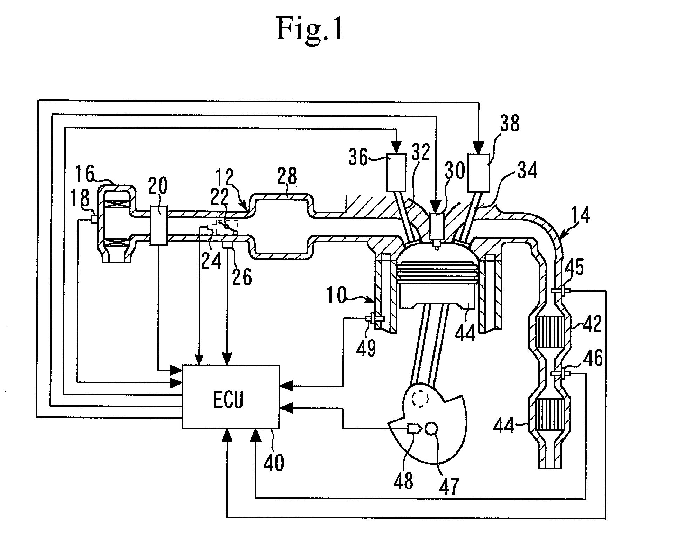

Fig. 1 is a schematic diagram illustrating the configuration of a system that includes an internal combustion engine valve mechanism according to each embodiment of the present invention. An internal combustion engine 10 communicates with an intake path 12 and an exhaust path 14. The intake path 12 includes an air filter 16, which is positioned at an upstream end. The air filter 16 includes an intake temperature sensor 18, which detects intake temperature THA (i.e., outside air temperature).

An air flow meter 20 is positioned downstream of the air filter 16. A throttle valve 22 is installed downstream of the air flow meter 20. A throttle sensor 24, which detects the throttle opening TA, and an idle switch 26, which turns ON when the throttle valve 22 fully closes, are positioned near the throttle valve 22. A surge tank 28 is placed downstream of the throttle valve 22.

The internal combustion engine 10 includes a fuel injection valve 30, which injects fuel into a combustion chamber (in a cylinder). The fuel injection valve 30 may be used to inject fuel into an intake port. The internal combustion engine 10 also includes an intake valve 32 and exhaust valve 34. The intake valve 32 is connected to a valve mechanism 36 that drives the intake valve 32. The exhaust valve 34 is connected to a valve mechanism 38 that drives the exhaust valve 34.

An ignition plug is mounted inside a cylinder of the internal combustion 10 to ignite fuel that is sprayed into the combustion chamber. Each cylinder of the internal combustion engine 10 has a piston 44. The piston 44 is coupled to a crankshaft 47, which rotates when the piston 44 reciprocates. The vehicle drive system and auxiliaries (air-conditioner compressor, alternator, torque converter, power steering pump, etc.) are driven by the rotary torque of the crankshaft 47. More specifically, the vehicle drive system is connected to the crankshaft 47 through a transmission (torque converter, not shown in Fig. 1). The crankshaft 47 serves as an input shaft for the torque converter. An output shaft of the torque converter is connected to a drive wheel through a differential gear.

A crank angle sensor 48 is mounted near the crankshaft 47 to detect the rotation angle of the crankshaft 47. The crank angle sensor 48 can detect the rotation speed of the crankshaft 47 (the rotation speed of the torque converter input shaft), that is, the engine speed. A water temperature sensor 49 is mounted on a cylinder block of the internal combustion engine 10 to detect cooling water temperature.

In the exhaust path 14, an upstream catalyst (start catalyst) 42 and a downstream catalyst (NOx occlusion catalyst) 44 are serially positioned. The upstream catalyst 42 has a relatively small capacity and is positioned near the internal combustion engine 10. Therefore, the upstream catalyst 42 is heated to an activation temperature within a short period of time, for instance, for engine cold start and mainly used for exhaust purification immediately after startup.

The downstream catalyst 44 has a larger capacity than the upstream catalyst 42 and plays a primary role in exhaust purification after warm-up. The upstream catalyst 42 and downstream catalyst 44 adsorb, absorb, or selectively adsorb and absorb to retain (occlude) NOx in the exhaust when the air-fuel ratio of incoming exhaust is lean, and reduce and purify occluded NOx with reducing components (HC and CO) when the air-fuel ratio of incoming exhaust is stoichiometric or rich. In other words, the upstream catalyst 42 and downstream catalyst 44 are oxidized when they retain (occlude) oxygen contained in a gas that flows in the exhaust path 14, and are reduced when they release oxygen in a situation where the exhaust contains the reducing components.

The exhaust path 14 is provided with an air-fuel ratio sensor (A/F sensor) 45. The air-fuel ratio sensor 45 is positioned upstream of the upstream catalyst 42 to detect the oxygen concentration in an exhaust gas. This sensor 45 determines the air-fuel ratio of an air-fuel mixture burned in the internal combustion engine 10 in accordance with the oxygen concentration in the exhaust gas that flows into the upstream catalyst 42.

An O₂ sensor 46 is positioned downstream of the upstream catalyst 42. The O₂ sensor 46 detects whether the oxygen concentration in the exhaust gas is greater or smaller than a predetermined value. This sensor 46 generates a voltage higher than a predetermine voltage (e.g., 0.45 V) when the exhaust air-fuel ratio at the sensor position is richer than the stoichiometric air-fuel ratio, and generates a voltage lower than the predetermined voltage when the exhaust air-fuel ratio is leaner than the stoichiometric air-fuel ratio. Therefore, the O₂ sensor 46 can determine whether a rich exhaust gas (exhaust gas containing HC and CO) or a lean exhaust gas (exhaust gas containing NOx) has flowed downstream of the upstream catalyst 42.

As shown in Fig. 1, a control device according to the present embodiment includes an ECU (Electronic Control Unit) 40. The ECU 40 is connected not only to the aforementioned sensors but also to a KCS sensor, which detects a knock, and various other sensors (not shown) that detect, for instance, the throttle opening, engine speed, exhaust temperature, cooling water temperature, lubricating oil temperature, or catalyst bed temperature to grasp the operating state of the internal combustion engine 10. The ECU 40 is also connected to actuators and sensors that are provided, for instance, for the aforementioned fuel injection valve 30 and valve mechanisms 36, 38.

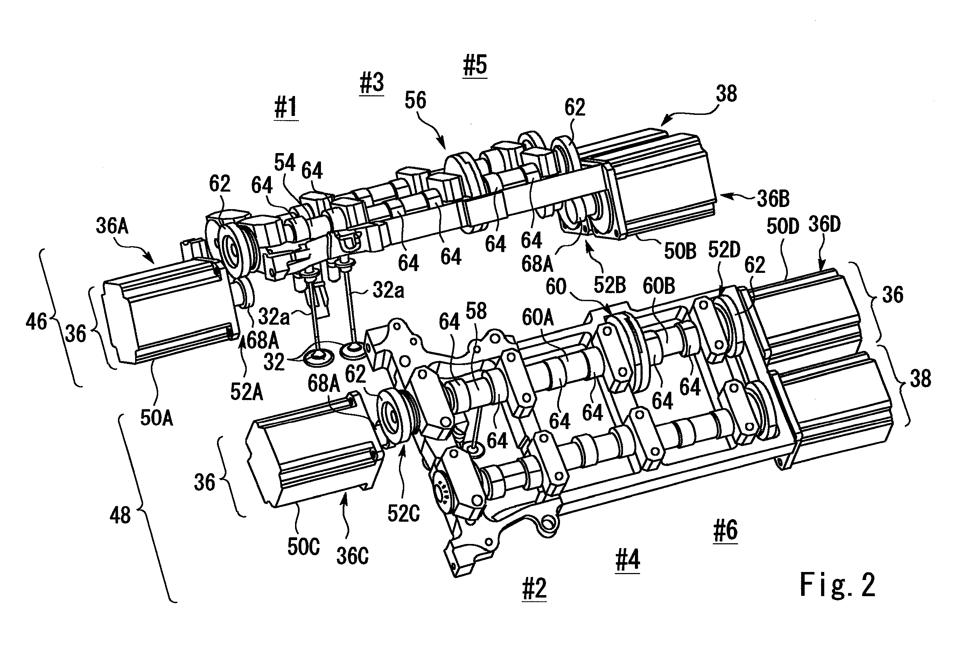

Fig. 2 is a schematic diagram illustrating the configuration of a section around the valve mechanisms 36, 38. This figure mainly shows the configuration of a section around a cylinder head. The internal combustion engine 10 according to the present embodiment is a V-type six-cylinder internal combustion engine. A first cylinder, a third cylinder, and a fifth cylinder are mounted in one bank 46, whereas a second cylinder, a fourth cylinder, and a sixth cylinder are mounted in another bank 48.

The bank 46 and bank 48 include the valve mechanism 36 for driving the intake valve 32 and the valve mechanism 38 for driving the exhaust valve 34, respectively. Although the configuration of the valve mechanism 36 will now be mainly described, the valve mechanism 36 has basically the same configuration as the valve mechanism 38. It is assumed that each cylinder of the internal combustion engine 10 has two intake valves 32 and two exhaust valves 34.

The valve mechanism 36 mounted in the bank 46 includes two devices (valve mechanism 36A and valve mechanism 36B). The valve mechanism 36 mounted in the bank 48 includes two devices (valve mechanism 36C and valve mechanism 36D). The valve mechanism 36A drives the intake valves 32 of the first cylinder, whereas the valve mechanism 36B drives the intake valves 32 of the third and fifth cylinders. The valve mechanism 36C drives the intake valves 32 of the second cylinder, whereas the valve mechanism 36D drives the intake valves 32 of the fourth and sixth cylinders.

The valve mechanism 36A includes an electric motor (hereinafter referred to as a motor) 50A, which serves as a driving source, a gear train 52A, which serves as a mechanism for transmitting the rotary motion of the motor 50A, and a camshaft 54, which converts the rotary motion transmitted from the gear train to a linear open/close motion of the intake valves 32.

Similarly, the valve mechanism 36B includes a motor 50B, a gear train 52B, and a camshaft 56. The valve mechanism 36C includes a motor 50C, a gear train 52C, and a camshaft 58. The valve mechanism 36D includes a motor 50D, a gear train 52D, and a camshaft 60. The gear trains 52B, 52C, 52D have the same configuration as the gear train 52A.

A DC brushless motor or other similar motor whose rotation speed is controllable is used as the motors 50A, 50B, 50C, 50D. The motors 50A, 50B, 50C, 50D include a resolver, rotary encoder, or other built-in position sensor that detects their rotational position. A cam drive gear 62 and a cam 64 are installed over the peripheries of the camshafts 54, 56, 58, 60. The cam drive gear 62 and cam 64 both rotate together with the camshafts 54, 56, 58, 60.

The gear train 52A transmits the rotation of a motor gear 68A, which is installed over an output shaft of the motor 50A, to the cam drive gear 62 on the camshaft 54. The gear train 52A may be configured so that the motor gear 68A and cam drive gear 62 rotate at the same speed or configured so that the cam drive gear 62 rotates at a higher speed or at a lower speed than the motor gear 68A. Similarly, the gear trains 52B, 52C, 52D transmit the rotation of the motor gears installed over output shafts of the motors 50B, 50C, 50D to the cam drive gear 62 for the camshafts 56, 58, 60.

In the bank 46, the camshaft 54 is positioned above the intake valves 32 of the first cylinder, The intake valves 32 of the first cylinder are opened/closed by two cams 64 that are installed over the camshaft 54. The camshaft 56 is positioned above the intake valves 32 of the third and fifth cylinders. The intake valves 32 of the third and fifth cylinders are opened/closed by four cams 64 that are installed over the camshaft 56.

In the bank 48, the camshaft 58 is positioned above the intake valves 32 of the second cylinder. The intake valves 32 of the second cylinder are opened/closed by two cams 64 that are installed over the camshaft 58. The camshaft 60 is positioned above the intake valves 32 of the fourth and sixth cylinders. The intake valves 32 of the fourth and sixth cylinders are opened/closed by four cams 64 that are installed over the camshaft 60.

The intake valves 32 may be directly driven by the cams 64 or driven through a rocker arm.

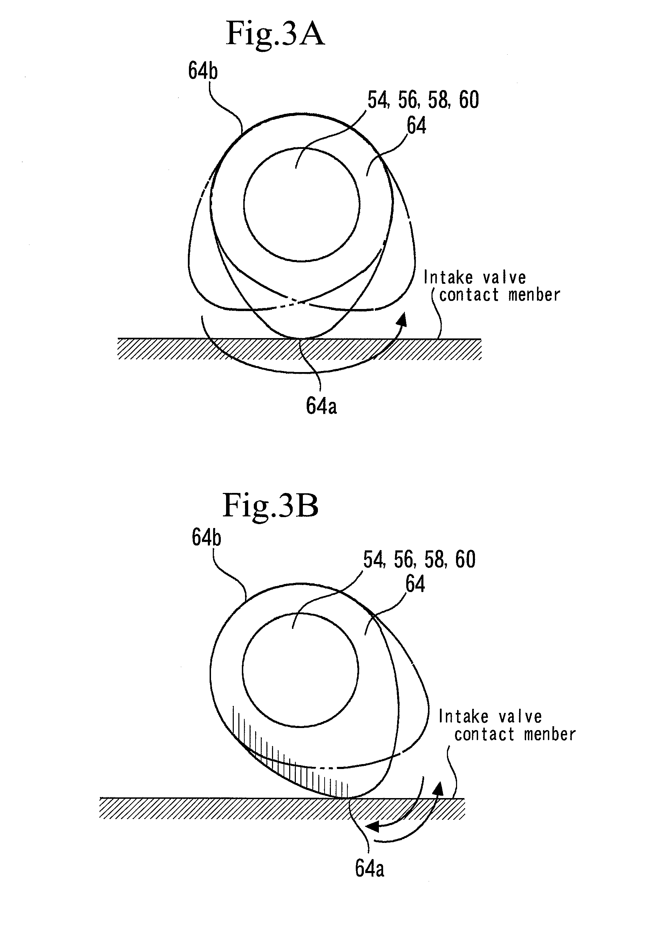

Figs. 3A and 3B illustrate how the intake valve 32 is driven by the cam 64. The cam 64 is formed as a plate cam whose nose 64a is formed by bulging a part of a circular base circle 64b coaxial with the camshafts 54-60 outward in radial direction. The cam 64 is profiled so that its entire circumference does not have negative curvature, that is, a convex curve is drawn outward in radial direction.

As shown in Fig. 2, each intake valve 32 includes a valve stem 32a. Compressive reaction force of a valve spring (not shown) pushes each intake valve 32 toward the cam 64. If the base circle 64b of the cam 64 faces a contact member (e.g., a rocker arm roller, or a retainer provided for the end of the intake valve 32 when a direct hit type is employed) on the intake valve side, a valve port closes as the intake valve 32 comes into close contact with a valve seat (not shown) of the intake port.

When the rotary motions of the motors 50A-50D are transmitted to the camshafts 54-60 through the gear trains 52A-52D, the cam 64 rotates together with the camshafts 54-60. The intake valve 32 is pressed downward as the nose 64a climbs over the contact member on the intake valve side. The intake valve 32 then opens/closes against the force of the valve spring.

Figs. 3A and 3B also indicate two drive modes for the cam 64: normal rotation drive mode and swing drive mode. In the normal rotation drive mode, the motors 50A-50D continuously rotate in one direction to rotate the cam 64 continuously in the direction of normal rotation (in the direction indicated by the arrow in Fig. 3A) beyond a maximum lift position as indicated in Fig. 3A, that is, a position at which the nose 64a of the cam 64 comes into contact with the contact member on the intake valve side. In the swing drive mode, on the other hand, the cam 64 reciprocates as shown in Fig. 3B while changing the rotation direction of the motors 50A-50D before the maximum lift position for the normal rotation drive mode is reached.

In the normal rotation drive mode, the operating angle and lift timing of the intake valve 32 is controlled by varying the rotation speed of the cam 64 with respect to crankshaft rotation. In the swing drive mode, the maximum lift amount, operating angle, and lift timing of the intake valve 32 can be controlled by controlling the rotation speed of the cam 64 and the swing angle range of the cam 64.

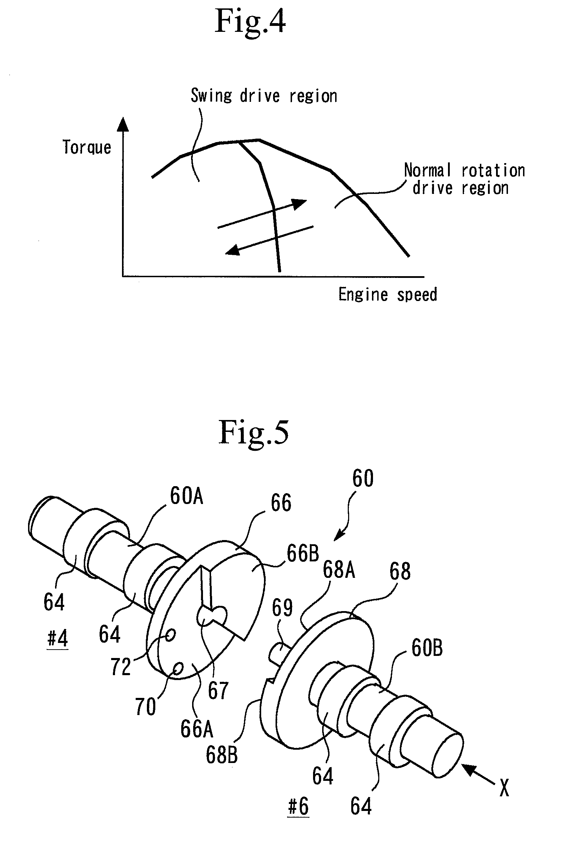

In the manner described above, the intake valve 32 can be driven while the lift amount and operating angle are optimized in accordance with the operating state. Fig. 4 is a schematic diagram illustrating the relationship among the engine speed and output torque of the internal combustion engine 10 and the drive modes of the cam 64. The drive modes of the cam 64 are selectively used in association with the engine speed and output torque as shown in Fig. 4. In a low engine speed region, the swing drive mode is basically selected. In a high engine speed region, on the other hand, the normal rotation drive mode is basically selected. Consequently, control is exercised so as to decrease the lift amount and operating angle of the intake valve 32 in the low engine speed region and increase the lift amount and operating angle of the intake valve 32 in the high engine speed region. As a result, an optimum amount of air can be delivered into an engine cylinder in accordance with the engine speed and output torque.

Fig. 5 is a schematic diagram illustrating in detail the configuration of the camshaft 60. As shown in Fig. 5, the camshaft 60 includes a camshaft 60A and a camshaft 60B. The camshaft 60A includes two cams 64 that drive the intake valves 32 of the fourth cylinder. The camshaft 60B includes two cams 64 that drive the intake valves 32 of the sixth cylinder. The camshaft 56 for driving the intake valves 32 of the third and fifth cylinders also includes two camshafts as is the case with the camshaft 60.

The camshaft 60A has a flange section 66 at its end. Similarly, the camshaft 60B has a flange section 68 at its end. There is a hole 67 in the center of the flange section 66 of the camshaft 60A. The flange section 68 of the camshaft 60B has a shaft 69 that protrudes from the center of the flange section 68 toward the camshaft 60A. The camshaft 60A and camshaft 60B are unified as the shaft 69 turnably fits into the hole 67, thereby bringing the end face of the flange section 66 into contact with the end face of the flange section 68.

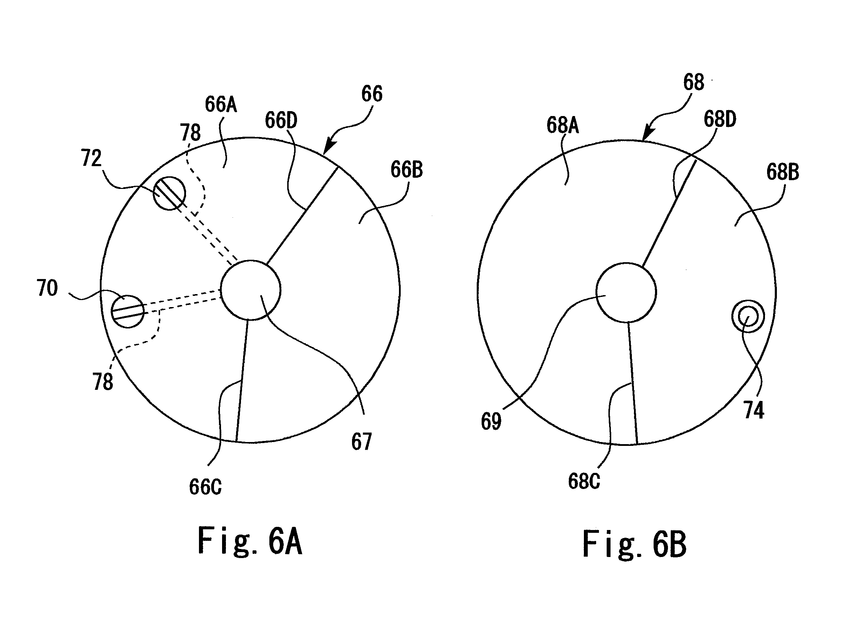

Figs. 6A and 6B are schematic diagrams illustrating the end faces of the flange sections 66, 68. Fig. 6A shows the end face of the flange section 66, whereas Fig. 6B shows the end face of the flange section 68. As shown in Figs. 5 and 6A, the end face of the flange section 66 has a reference surface 66A and a protrusion surface 66B. The protrusion surface 66B protrudes toward the camshaft 60B in relation to the reference surface 66A. The boundaries between the reference surface 66A and protrusion surface 66B are provided with stepped sections 66C, 66D.

Similarly, the end face of the flange section 68 has a reference surface 68A and a protrusion surface 68B as shown in Figs. 5 and 6B. The protrusion surface 68B protrudes toward the camshaft 60A in relation to the reference surface 68A. The boundaries between the reference surface 68A and protrusion surface 68B are provided with stepped sections 68C, 68D.

While the camshaft 60A and camshaft 60B are coupled together, the reference surface 66A of the flange section 66 is in close contact with the protrusion surface 68B of the flange section 68, and the reference surface 68A of the flange section 68 is in close contact with the protrusion surface 66B of the flange section 66.

As shown in Fig. 6A, there are two holes 70, 72 in the reference surface 66A of the flange section 66. As shown in Fig. 6B, the protrusion surface 68B of the flange section 68 is provided with a lock pin 74. The lock pin 74 protrudes from the protrusion surface 68B toward the camshaft 60A.

The distance between the center of the shaft 69 and the center of the lock pin 74 is equal to the distance between the center of the hole 70 or hole 72 and the center of the hole 67. The inside diameters of the holes 70, 72 and the outside diameter of the lock pin 74 are determined so that the lock pin 74 fits into the holes 70, 72. Therefore, while the shaft 69 is fitted into the hole 67, the lock pin 74 can fit into the hole 70 or hole 72 as far as the angular position of the hole 70 or hole 72 agrees with that of the lock pin 74.

If the lock pin 74 is not inserted into the hole 70 or the hole 72 while the camshaft 60A and camshaft 60B are coupled together, the camshaft 60A and camshaft 60B can be relatively rotated. When the lock pin 74 is inserted into either the hole 70 or the hole 72, the relative rotational positions of the camshaft 60A and camshaft 60B are locked.

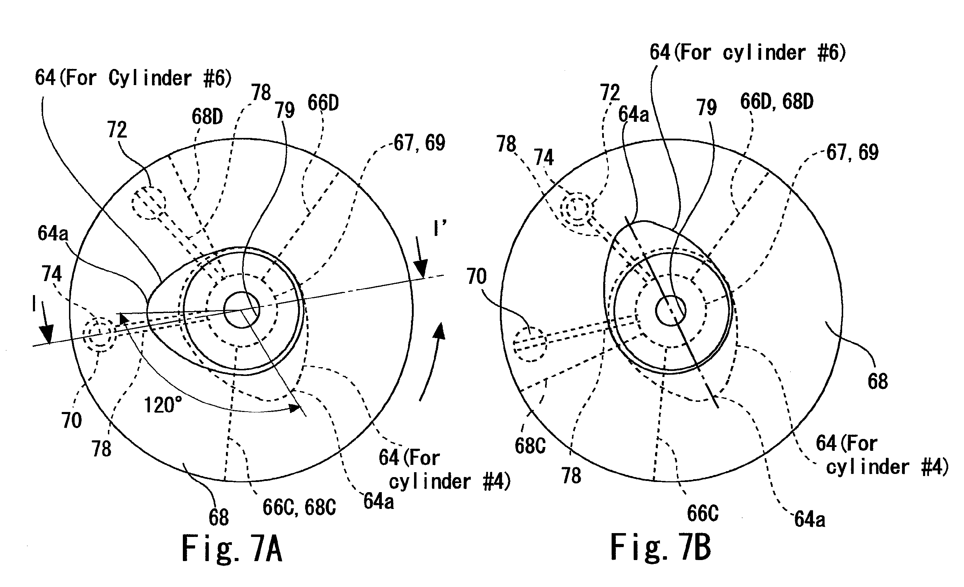

Figs. 7A and 7B are schematic diagrams that relate to a situation where the camshaft 60A and camshaft 60B are coupled together, and illustrate the positional relationship between the cam 64 on the camshaft 60A and the cam 64 on the camshaft 60B. Figs. 7A and 7B are views of the camshaft 60 as taken in the direction of arrow X in Fig. 5. Fig. 7A shows a state in which the lock pin 74 is inserted into the hole 70. Fig. 7B shows a state in which the lock pin 74 is inserted into the hole 72.

The state shown in Fig. 7A is set when the intake valve 32 is opened/closed in the normal rotation drive mode. While the lock pin 74 is inserted into the hole 70, the nose 64a of the fourth-cylinder cam 64 on the camshaft 60A is positioned 120° apart from the nose 60a of the sixth-cylinder cam 64 on the camshaft 60B, as shown in Fig. 7A.

While the lock pin 74 is inserted into the hole 70 as shown in Fig. 7A, the stepped section 66C of the flange section 66 is in contact with the stepped section 68C of the flange section 68. The rotational positions of the camshaft 60A and camshaft 60B are governed by the engagement between the lock pin 74 and hole 70, and their relative rotational positions in a direction in which the stepped section 66C comes into contact with the stepped section 68C are governed by the contact between the stepped section 66C and stepped section 68C. The rotational positions can be properly locked because the relative rotational positions of the camshaft 60A and camshaft 60B are locked as described above by making use of the engagement between the lock pin 74 and hole 70 and the contact between the stepped section 66C and stepped section 68C.

In a V-type six-cylinder internal combustion engine 10, an explosion stroke is performed in the first, second, third, fourth, fifth, and sixth cylinders in the order named when the crankshaft makes two revolutions (= 720°). It means that the crankshaft rotates 240° between the intake stroke of the fourth cylinder and the intake stroke of the sixth cylinder. When, in this instance, the motor 50D of the valve mechanism 36D is driven in such a manner that the ratio between the number of rotations of the camshaft 60 and the number of rotations of the crankshaft is 1:2, the camshaft 60 rotates 120° between the intake stroke of the fourth cylinder and the intake stroke of the sixth cylinder. Therefore, when the camshaft 60 rotates in the direction of the arrow in Fig. 7A (counterclockwise) so that the fourth-cylinder cam 64 is positioned 120° apart from the sixth-cylinder cam 64, the intake valves 32 of the fourth and sixth cylinders can be opened/closed in accordance with the intake strokes of the fourth and sixth cylinders. When, in the normal rotation drive mode, the number of rotations of the camshaft 60 is varied from a state in which the ratio between the number of rotations of the camshaft 60 and the number of rotations of the crankshaft is 1:2, the operating angle and lift timing for an intake valve lift can be varied.

Meanwhile, if the swing drive mode is used in the state shown in Fig. 7A, the camshaft 60 needs to be greatly rotated after the intake valves 32 of one cylinder are driven, as described with reference to Figs. 28A to 28C. This increases the power consumption of the motor.

As such being the case, when the intake valves 32 are to be opened/closed in the swing drive mode, the present embodiment varies the relative angular positions of the camshaft 60A and camshaft 60B from the state shown in Fig. 7A, and governs the positions of these camshafts so that the nose 64a of the fourth-cylinder cam 64 on the camshaft 60A is positioned 180° apart from the nose 60a of the sixth-cylinder cam 64 on the camshaft 60B as shown in Fig. 7B.

After the intake valves 32 of either the fourth cylinder or sixth cylinder are driven in the swing drive mode, the rotation amount of the camshaft 60 for driving the intake valves 32 of the remaining cylinder can therefore be rendered smaller than those indicated in Figs. 28A to 28C. More specifically, when the nose 64a of the fourth-cylinder cam 64 is positioned 180° apart from the nose 60a of the sixth-cylinder cam 64 on the camshaft 60B, the rotation amount of the camshaft 60 can be rendered approximately 60° smaller than those indicated in Figs. 28A to 28C. This makes it possible to considerably reduce the power consumption of the motor 50D when the intake valves 32 are driven in the swing drive mode.

In the state shown in Fig. 7B, the lock pin 74 is inserted into the hole 72 to bring the stepped section 66D of the flange section 66 into contact with the stepped section 68D of the flange section 68. Therefore, the rotational positions of the camshaft 60A and camshaft 60B are governed by the engagement between the lock pin 74 and the hole 72, and their relative rotational positions in a direction in which the stepped section 66D comes into contact with the stepped section 68D are governed by the contact between the stepped section 66D and stepped section 68D.

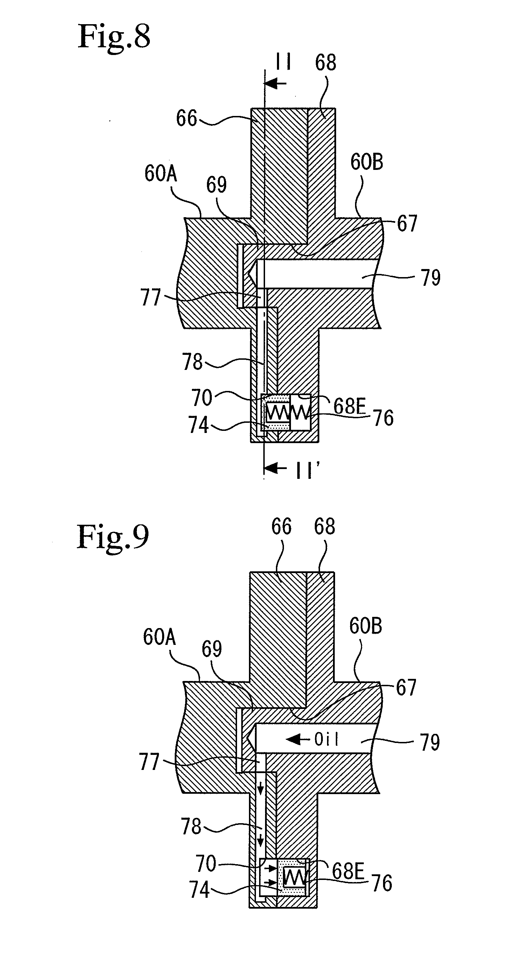

Next, a mechanism for changing the engagement between the lock pin 74 and the hole 70/hole 72 will now be described. Fig. 8 is a cross-sectional view that is taken along one-dot chain line I-I' in Fig. 7A to show the vicinity of a joint between the camshaft 60A and camshaft 60B. As shown in Fig. 8, the shaft 69 on the flange section 68 is turnably engaged with the hole 67 in the flange section 66.

As shown in Fig. 8, the lock pin 74 is inserted into a receiver hole 68E in the flange section 68. A compression spring 76 is positioned between the lock pin 74 and the bottom of the receiver hole 68E.

An oil path 78 is connected to the holes 70, 72 in the flange section 66. As shown in Figs. 6A, 6B, 7A, and 7B, the oil path 78 is radially extended from the hole 67 toward the hole 70 and hole 72.

As shown in Fig. 8, the camshaft 60B has an oil path 79, which is provided along the rotational center axis of the camshaft 60B. The end of the oil path 79 is provided with an oil path 77 that is extended toward the outer circumference of the shaft 69. While the camshaft 60A and camshaft 60B are coupled together, the oil path 77 and oil path 78 agree in thrust direction, and the oil path 77 is connected to the two oil paths 78.

An oil pump delivers oil to the oil path 79 under a predetermined pressure. The oil delivered to the oil path 79 is forwarded to the hole 70 and hole 72 through the oil path 77 and oil path 78.

Fig. 8 shows a state in which oil pressure is exerted. In this state, the pushing force of the compression spring 76 inserts the lock pin 74 into the hole 70 in the flange section 66. The relative rotational positions of the camshaft 60A and camshaft 60B are then set as indicated in Fig. 7A.

Fig. 9 shows a state in which oil is supplied to the hole 70 through the oil path 79, oil path 77, and oil path 78 and pressurized. In this state, the hole 70 is filled with the oil, and the lock pin 74 goes into the receiver hole 68E under oil pressure. While the lock pin 74 is placed in the receiver hole 68E, the upper surface of the lock pin 74 is concaved below the protrusion surface 68B of the flange section 68. Therefore, the lock pin 74 is disengaged from the hole 70 or hole 72 so that the camshaft 60A and camshaft 60B can be relatively rotated.

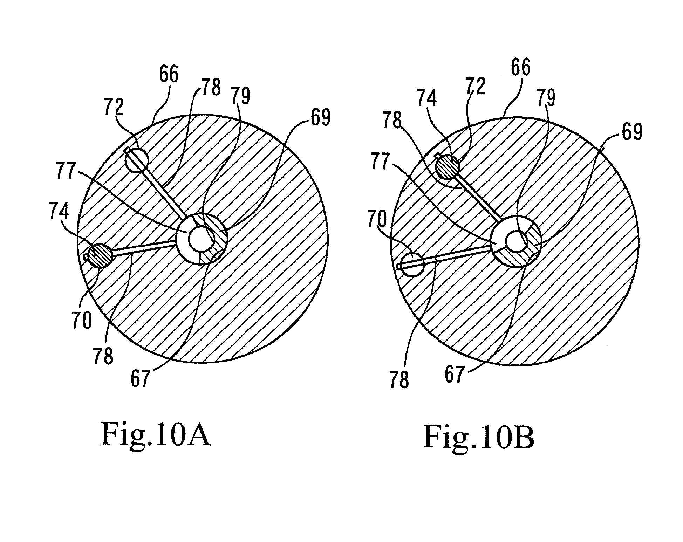

Figs. 10A and 10B are cross-sectional views that are taken along one-dot chain line II-II' in Fig. 8. The state shown in Fig. 10A corresponds to the state shown in Fig. 7A, whereas the state shown in Fig. 10B corresponds to the state shown in Fig. 7B. More specifically, Fig. 10A indicates that the lock pin 74 is inserted into the hole 70, whereas Fig. 10B indicates that the lock pin 74 is inserted into the hole 72.

The oil path 77 has a continuous fan shape over a predetermined angular range so that the oil path 79 is constantly connected to the two oil paths 78 even when the relative angular positions of the camshaft 60A and camshaft 60B vary between the state shown in Fig. 10A and the state shown in Fig. 10B. More specifically, the angular range of the oil path 77 is larger than the sum (= 120°) of the angle (= 60°) formed by the two oil paths 78 and the relative rotation angle (= 60°) between the camshaft 60A and camshaft 60B. Therefore, when the oil in the oil path 79 is pressurized, the oil is supplied to both the hole 70 and hole 72. This makes it possible to drive the lock pin 74, which is inserted into the hole 70 or hole 72.

Even when the rotational positions of the camshaft 60A and camshaft 60B vary as shown in Figs. 7A and 7B, the protrusion surface 68B of the flange section 68 is constantly positioned over the two holes 70, 72 in the flange section 66. Since the reference surface 66A of the flange section 66 is in close contact with the protrusion surface 68B of the flange section 68, the holes 70, 72 are constantly covered with the protrusion surface 68B.

Consequently, when oil pressure is exerted at the time of lock pin disengagement, the oil is supplied to both the hole 70 and hole 72; however, the oil does not flow out of the holes with which the lock pin 74 is not engaged. This makes it possible to properly avoid an oil pressure decrease due to outward oil flow when the lock pin 74 becomes disengaged.

Timing for disengaging the lock pin 74 from the holes 70, 72 will now be described. First of all, the description relates to a situation where a mode switch is made from the normal rotation drive mode to the swing drive mode. As shown in Fig. 2, the cam drive gear 62 for driving the camshaft 60 is installed over the camshaft 60B. In the normal rotation drive mode, the lock pin 74 engages with the hole 70 to bring the stepped section 66C into contact with the stepped section 68C. Further, the rotary motion of the camshaft 60B is transmitted to the camshaft 60A so that the camshaft 60A and camshaft 60B rotate in the direction of the arrow in Fig. 7A (counterclockwise).

When a mode switch is made to enter the swing drive mode, the direction of output shaft rotation of the motor 50D is reversed, and the oil in the oil path 79 is pressurized. The oil is then supplied to the hole 70. This causes the lock pin 74 to enter the receiver hole 68E under oil pressure.

When the lock pin 74 is placed in the receiver hole 68E, the camshaft 60B can rotate relative to the camshaft 60A. In this instance, the direction of output shaft rotation of the motor 50D is reversed, and the rotary motion of the output shaft is transmitted to the camshaft 60B through the cam drive gear 62. Therefore, when the motor 50D reverses, the camshaft 60B rotates clockwise relative to the camshaft 60A as viewed in Fig. 7A. The reaction force of valve springs for the fourth-cylinder intake valves 32 is exerted on the cam 64 on the camshaft 60A, and sliding resistance is generated in the rotation direction of the camshaft 60A. Consequently, when the motor 50D reverses with the lock pin 74 disengaged from the hole 70, the camshaft 60A does not rotate in the same direction as the camshaft 60B.

When the camshaft 60B begins to rotate relative to the camshaft 60A, the oil pressure applied to the oil path 79 is relieved. Further, as the camshaft 60B rotates relative to the camshaft 60A, the distance between the stepped section 66D and stepped section 68D decreases. Eventually, the stepped section 66D comes into contact with the stepped section 68D. The positions of the hole 72 and lock pin 74 then agree with each other. Since the oil pressure is already relieved, the force of the compression spring 76 inserts the lock pin 74 into the hole 72. The relative angular positions of the camshaft 60A and camshaft 60B are then set as shown in Fig. 7B. Consequently, the camshaft 60 can be driven in the swing drive mode.

A situation where a mode switch is made from the swing drive mode to the normal rotation drive mode will now be described. When a mode switch is made to enter the normal rotation drive mode, the motor 50D is driven in such a direction that the camshaft 60B rotates counterclockwise as viewed in Fig. 7B. Further, the oil in the oil path 79 is pressurized in this state. The oil is then supplied to the hole 72 so that the lock pin 74 goes into the receiver hole 68E under oil pressure.

When the lock pin 74 is placed in the receiver hole 68E, the camshaft 60B can rotate in any direction without regard to the rotation direction of the camshaft 60A. The camshaft 60B receives the driving force of the motor 50D and rotates counterclockwise relative to the camshaft 60A as viewed in Fig. 7B. However, sliding resistance is generated in the rotation direction of the camshaft 60A due to the reaction force of a valve spring. Therefore, the camshaft 60A does not rotate in the same direction as the camshaft 60B.

When the camshaft 60B begins to rotate relative to the camshaft 60A, the oil pressure applied to the oil path 79 is relieved. Further, as the camshaft 60B rotates relative to the camshaft 60A, the distance between the stepped section 66C and stepped section 68C decreases. Eventually, the stepped section 66C comes into contact with the stepped section 68C. The positions of the hole 70 and lock pin 74 then agree with each other. Since the oil pressure is already relieved, the force of the compression spring 76 inserts the lock pin 74 into the hole 70. The relative angular positions of the camshaft 60A and camshaft 60B are then set as shown in Fig. 7A. Consequently, the camshaft 60 can be driven in the normal rotation drive mode.

The same holds true for the camshaft 56. When the intake valves 32 are to be driven in the swing drive mode, the relative position of the cam 64 is varied from the one in the normal rotation mode. The camshaft 56 is provided with a third-cylinder cam 64 and a fifth-cylinder cam 64, and the crankshaft rotates 240° between the intake stroke of the third cylinder and the intake stroke of the fifth cylinder. Therefore, when the ratio between the number of rotations of the camshaft 56 and the number of rotations of the crankshaft is 1:2, the camshaft 56 rotates 120° between the intake stroke of the third cylinder and the intake stroke of the fifth cylinder. Consequently, when the third-cylinder cam 64 is positioned 120° apart from the fifth-cylinder cam 64 in the normal rotation drive mode, the intake valves 32 can be opened/closed in accordance with the intake strokes of the third and fifth cylinders. Further, when, in the swing drive mode, the relative angular positions of the two camshafts constituting the camshaft 56 are changed so that the third-cylinder cam 64 is positioned 180° apart from the fifth-cylinder cam 64, the rotation amount of the camshaft 56 can be minimized in the swing drive mode.

When a V-type six-cylinder internal combustion engine 10 drives the intake valves 32 of two cylinders with one camshaft 60 in the swing drive mode, the first embodiment varies the relative positions of the cams 64 from those in the normal rotation drive mode as described above. Therefore, the rotation amount of the camshaft 60 for the swing drive mode can be reduced. This makes it possible to reduce the power consumption of the motor 50D, which drives the camshaft 60, and provide enhanced system efficiency.

### Second Embodiment

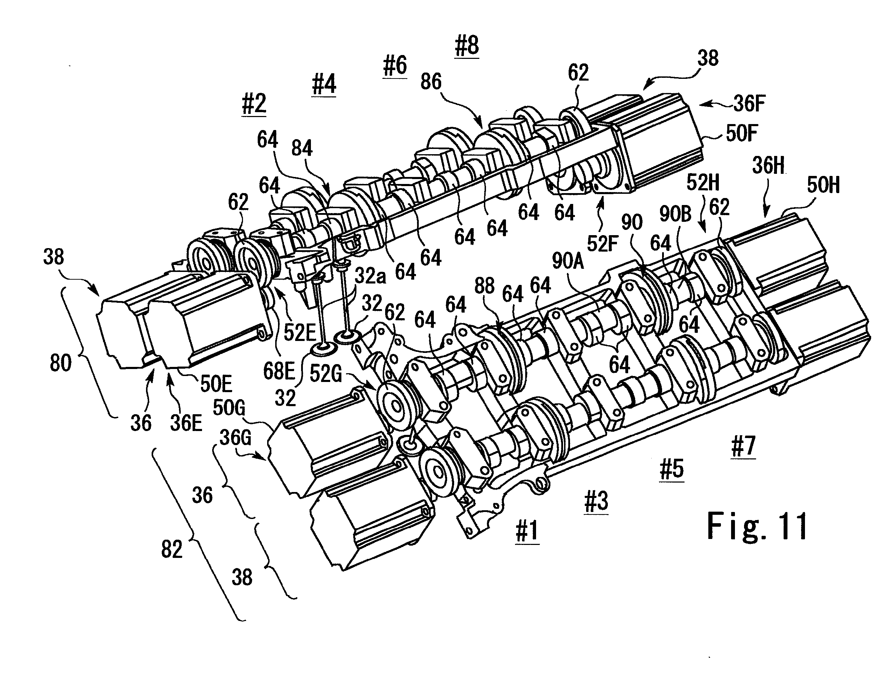

A second embodiment of the present invention will now be described. The second embodiment is obtained by applying the present invention to an eight-cylinder internal combustion engine 10. Fig. 11 is a schematic diagram illustrating the configuration of a section around two valve mechanisms 36, 38 according to the second embodiment. This figure mainly shows the configuration of a section around a cylinder head. The internal combustion engine 10 according to the present embodiment includes eight V-type cylinders. A second cylinder, a fourth cylinder, a sixth cylinder, and an eighth cylinder are mounted in one bank 80, whereas a first cylinder, a third cylinder, a fifth cylinder, and a seventh cylinder are mounted in another bank 82.

The bank 80 and bank 82 include the valve mechanism 36 for driving the intake valve 32 and the valve mechanism 38 for driving the exhaust valve 34, respectively. Although the configuration of the valve mechanism 36 will now be mainly described, the valve mechanism 36 has basically the same configuration as the valve mechanism 38. As is the case with the first embodiment, it is assumed that each cylinder of the internal combustion engine 10 has two intake valves 32 and two exhaust valves 34.

The valve mechanism 36 mounted in the bank 80 includes two devices (valve mechanism 36E and valve mechanism 36F). The valve mechanism 36 mounted in the bank 82 includes two devices (valve mechanism 36G and valve mechanism 36H). The valve mechanism 36E drives the intake valves 32 of the second and fourth cylinders, whereas the valve mechanism 36F drives the intake valves 32 of the sixth and eighth cylinders. The valve mechanism 36G drives the intake valves 32 of the first and third cylinders, whereas the valve mechanism 36H drives the intake valves 32 of the fifth and seventh cylinders.

As is the case with the first embodiment, the valve mechanisms 36E, 36F, 36G, 36H include motors 50E, 50F, 50G, 50H, respectively, as a driving source. In the bank 80, the rotary motion of the motor 50E is transmitted to a camshaft 84 through a gear train 52E. Similarly, the rotary motion of the motor 50F is transmitted to a camshaft 86 through a gear train 52F.

In the bank 82, the rotary motion of the motor 50G is similarly transmitted to a camshaft 88 through a gear train 52G. The rotary motion of the motor 50H is similarly transmitted to a camshaft 90 through a gear train 52H.

In the bank 80, the camshaft 84 is positioned above the intake valves 32 of the second and fourth cylinders. The intake valves 32 of the second and fourth cylinders are opened/closed by four cams 64 that are installed over the camshaft 84. The camshaft 86 is positioned above the intake valves 32 of the sixth and eighth cylinders. The intake valves 32 of the sixth and eighth cylinders are opened/closed by four cams 64 that are installed over the camshaft 86.

In the bank 82, the camshaft 88 is positioned above the intake valves 32 of the first and third cylinders. The intake valves 32 of the first and third cylinders are opened/closed by four cams 64 that are installed over the camshaft 88. The camshaft 90 is positioned above the intake valves 32 of the fifth and seventh cylinders. The intake valves 36 of the fifth and seventh cylinders are opened/closed by four cams 64 that are installed over the camshaft 90.

In the system according to the present embodiment, which is configured as described above, the intake valves 32 of each cylinder are also driven in either the normal rotation drive mode or the swing drive mode. Therefore, the lift amounts and operating angles of the intake valves 32 of each cylinder can be freely varied as is the case with the first embodiment.

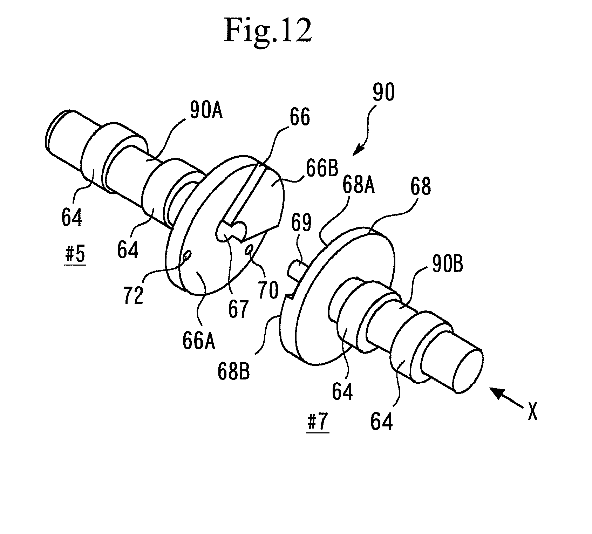

Fig. 12 is a schematic diagram illustrating in detail the configuration of the camshaft 90. As shown in Fig. 12, the camshaft 90 includes a camshaft 90A and a camshaft 90B. The camshaft 90A has two cams 64 that drive the intake valves 32 of the fifth cylinder. The camshaft 90B has two cams 64 that drive the intake valves 32 of the seventh cylinder. Like the camshaft 90, the camshaft 84, camshaft 86, and camshaft 88 include two camshafts.

Like the camshaft 60 according to the first embodiment, the camshaft 90A has a flange section 66 at its end. Similarly, the camshaft 90B has a flange section 68 at its end. There is a hole 67 in the center of the flange section 66 of the camshaft 90A. The flange section 68 of the camshaft 90B has a shaft 69 that protrudes from the center of the flange section 68 toward the camshaft 90A. The camshaft 90A and camshaft 90B are unified as the shaft 69 turnably fits into the hole 67, thereby bringing the end face of the flange section 66 into contact with the end face of the flange section 68.

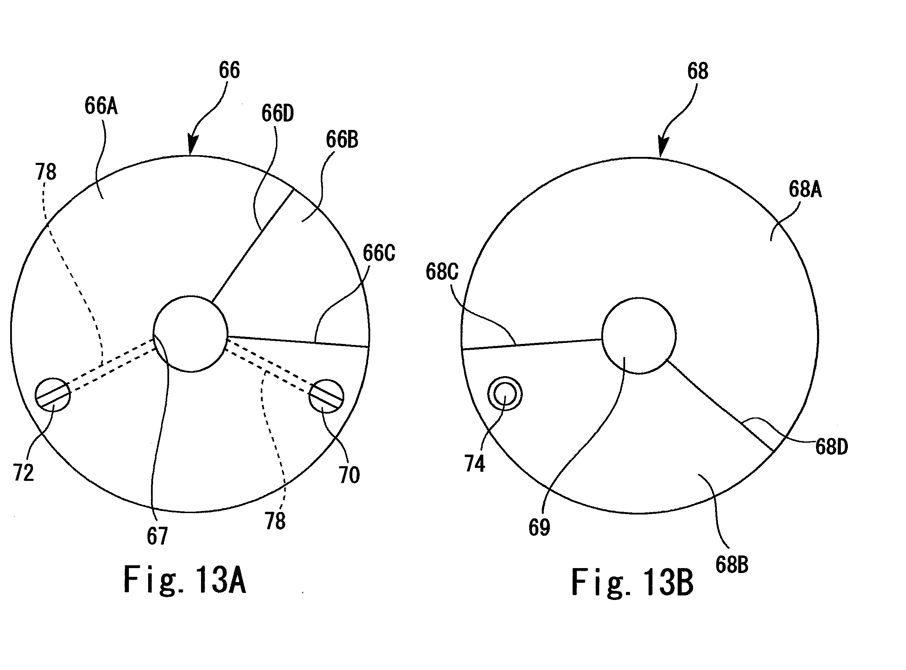

Figs. 13A and 13B are schematic diagrams illustrating the end faces of the flange sections 66, 68 that are provided for the camshaft 90A and camshaft 90B. Fig. 13A shows the end face of the flange section 66 of the camshaft 90A, whereas Fig. 13B shows the end face of the flange section 68 of the camshaft 90B.

The end faces of the flange sections 66, 68 are configured the same as the counterparts according to the first embodiment, which are described with reference to Figs. 6A and 6B. More specifically, the flange section 66 has a reference surface 66A and a protrusion surface 66B. The boundary between the reference surface 66A and protrusion surface 66B is provided with stepped sections 66C, 66D. Similarly, the flange section 68 has a reference surface 68A and a protrusion surface 68B. The boundary between the reference surface 68A and protrusion surface 68B is provided with stepped sections 68C, 68D. There are two holes 70, 72 in the reference surface 66A of the flange section 66. As shown in Fig. 13B, the protrusion surface 68B of the flange section 68 is provided with a lock pin 74. The lock pin 74 protrudes from the protrusion surface 68B toward the camshaft 90A.

If the lock pin 74 is not inserted into the hole 70 or hole 72 while the camshaft 90A and camshaft 90B are coupled together, the camshaft 90A and camshaft 90B can relatively rotate as is the case with the first embodiment. When the lock pin 74 is inserted into either the hole 70 or hole 72, the relative rotational positions of the camshaft 90A and camshaft 90B are locked.

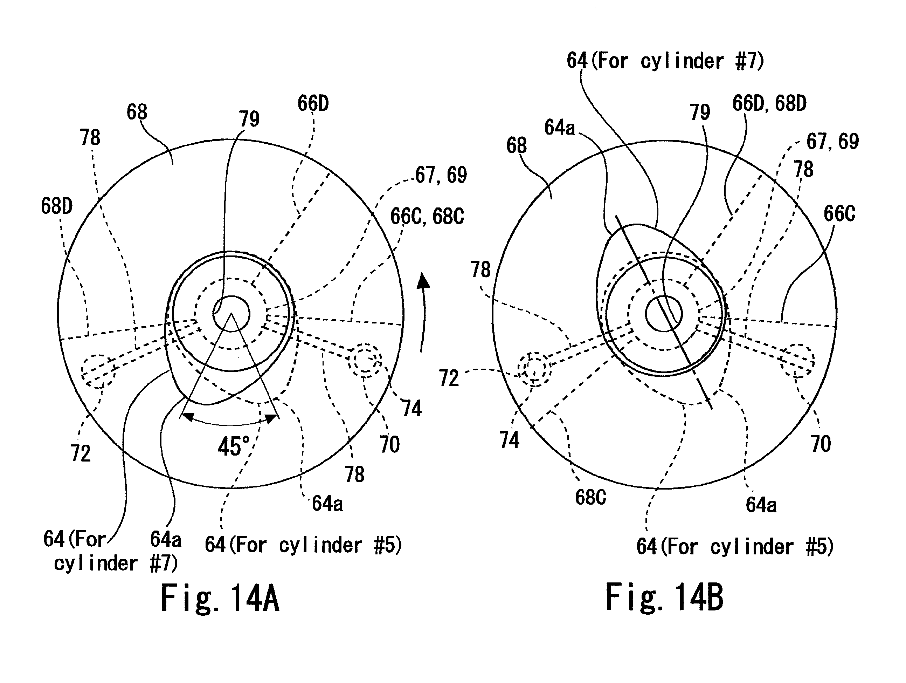

Figs. 14A and 14B are schematic diagrams that relate to a situation where the camshaft 90A and camshaft 90B are coupled together and illustrate the positional relationship between the cams 64 on the camshaft 90A and the cams 64 on the camshaft 90B. Figs. 14A and 14B are views of the camshaft 90 as taken in the direction of arrow X in Fig. 12. Fig. 14A shows a state in which the lock pin 74 is inserted into the hole 70. Fig. 14B shows a state in which the lock pin 74 is inserted into the hole 72.

The state shown in Fig. 14A is set when the intake valve 32 is opened/closed in the normal rotation drive mode. While the lock pin 74 is inserted into the hole 70, the nose 64a of the fifth-cylinder cam 64 on the camshaft 90A is positioned 45° apart from the nose 60a of the seventh-cylinder cam 64 on the camshaft 90B, as shown in Fig. 14A.

While the lock pin 74 is inserted into the hole 70 as shown in Fig. 14A, the stepped section 66C of the flange section 66 is in contact with the stepped section 68C of the flange section 68. Therefore, the rotational positions of the camshaft 90A and camshaft 90B are governed by the engagement between the lock pin 74 and hole 70, and their relative rotational positions in a direction in which the stepped section 66C comes into contact with the stepped section 68C are governed by the contact between the stepped section 66C and stepped section 68C.

In a V-type eight-cylinder internal combustion engine 10, an explosion stroke is performed in the first, eighth, fourth, third, sixth, fifth, seventh, and second cylinders in the order named when the crankshaft makes two revolutions (= 720°). It means that the crankshaft rotates 90° between the intake stroke of the fifth cylinder and the intake stroke of the seventh cylinder. When, in this instance, the motor 50H of the valve mechanism 36H is driven in such a manner that the ratio between the number of rotations of the camshaft 90 and the number of rotations of the crankshaft is 1:2, the camshaft 90 rotates 45° between the intake stroke of the fifth cylinder and the intake stroke of the seventh cylinder. Therefore, when the camshaft 90 rotates in the direction of the arrow in Fig. 14A (counterclockwise) so that the fifth-cylinder cam 64 is positioned 45° apart from the seventh-cylinder cam 64, the intake valves 32 of the fifth and seventh cylinders can be opened/closed in accordance with the intake strokes of the fifth and seventh cylinders.

If, on the other hand, the angular positions of the cams 64 for the fifth and seventh cylinders are set as shown in Fig. 14A, it is necessary to rotate the camshaft 90 considerably, as described with reference to Figs. 28A to 28C, after the intake valves 32 for the fifth or seventh cylinder are driven. This increases the power consumption of the motor. Particularly, in the second embodiment in which the internal combustion engine 10 has eight cylinders, the relative angular positions of the cams 64 for the two cylinders, which are mounted on the camshaft 90, are closer to each other than in the first embodiment. In the state shown in Fig. 14A in which the angular positions of the cams 64 for the two cylinders are close to each other, therefore, the rotation angle of the camshaft 90 for changing the intake valves 32 is larger than in the state shown in Figs. 28A to 28C. This results in an increase in the power consumption of the motor.

As such being the case, when the intake valves 32 are to be opened/closed in the swing drive mode, the present embodiment also varies the relative angular positions of the camshaft 90A and camshaft 90B from the state shown in Fig. 14A. More specifically, the present embodiment varies the positions of these camshafts so that the nose 64a of the fifth-cylinder cam 64 on the camshaft 90A is positioned 180° apart from the nose 60a of the seventh-cylinder cam 64 on the camshaft 90B as shown in Fig. 14B.

After the intake valves 32 of either the fifth or seventh cylinder are driven in the swing drive mode, the rotation amount of the camshaft 90 for driving the intake valves 32 of the remaining cylinder can therefore be reduced. This makes it possible to minimize the power consumption of the motor 50H when the intake valves 32 are driven in the swing drive mode.

As shown in Figs. 13A, 14A, and 14B, the oil path 78 is connected to the holes 70, 72 in the flange section 66. Further, the camshaft 90B is provided with the oil path 79 and oil path 77 as is the case with the camshaft 60B according to the first embodiment. The mechanism for changing the engagement between the lock pin 74 and the hole 70/hole 72 is configured the same as in the first embodiment.

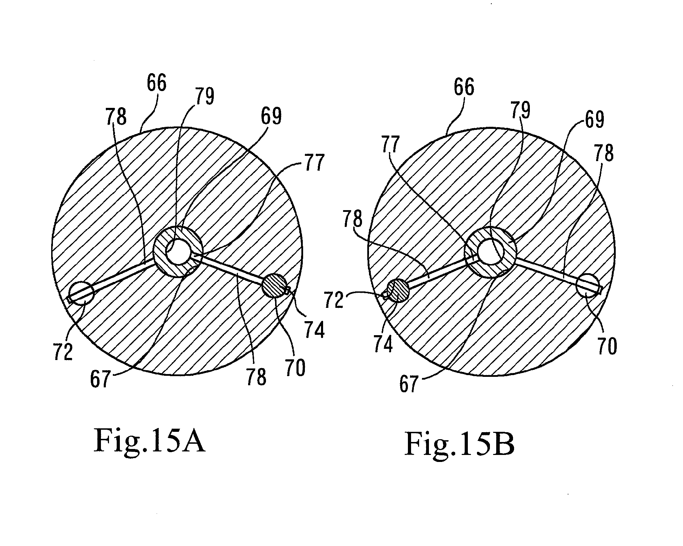

Figs. 15A and 15B are cross-sectional views illustrating a thrust position at which the oil paths 77, 78 are provided, like Figs. 10A and 10B, which illustrate the first embodiment. The state shown in Fig. 15A corresponds the state shown in Fig. 14A, whereas the state shown in Fig. 15B corresponds to the state shown in Fig. 14B. More specifically, Fig. 15A indicates that the lock pin 74 is inserted into the hole 70, whereas Fig. 15B indicates that the lock pin 74 is inserted into the hole 72.

As shown in Figs. 15A and 15B, the shape of the oil path 77 differs from the oil path shape according to the first embodiment, which was described with reference to Figs. 10A and 10B. The oil path 77 has the same width as the oil path 78. While the lock pin 74 is engaged with the hole 70, only the oil path 78, which is connected to the hole 70, is connected to the oil path 77 as shown in Fig. 15A. Further, while the lock pin 74 is engaged with the hole 72, only the oil path 78, which is connected to the hole 72, is connected to the oil path 77 as shown in Fig. 15B. Therefore, when oil is supplied to the oil path 79 in the state shown in Fig. 15A, the oil is delivered only to the hole 70 so that the lock pin 74 disengages from the hole 70. On the other hand, when oil is supplied to the oil path 79 in the state shown in Fig. 15B, the oil is delivered only to the hole 72 so that the lock pin 74 disengages from the hole 72.

The second embodiment differs from the first embodiment in the rotation angle of the camshaft 90B relative to the camshaft 90A. In the state shown in Fig. 14B, therefore, the hole 70 will never be covered with the protrusion surface 68B of the flange section 68. Consequently, if the configuration for simultaneously supplying the oil to the hole 70 and hole 72 is employed as is the case with the first embodiment, the oil may flow through the hole 70 and out of the camshaft 90, thereby making it impossible to obtain a desired oil pressure at the time of lock pin disengagement.

As described earlier, the second embodiment configures the oil path 77 so that the oil is supplied only to the hole with which the lock pin 74 is engaged. Therefore, the second embodiment prevents the oil from flowing out of the hole with which the lock pin 74 is not engaged. This makes it possible to properly prevent the oil pressure from decreasing when the lock pin 74 becomes disengaged. Further, since the oil is supplied only to the hole with which the lock pin 74 is engaged, it is possible to reduce the amount of hydraulic fluid and provide improved response at the time of lock pin disengagement.

Timing for disengaging the lock pin 74 from the holes 70, 72 is the same as described in conjunction with the first embodiment. In the second embodiment, the cam drive gear 62 for driving the camshaft 90 is installed over the camshaft 90B as shown in Fig. 11.

In the normal rotation drive mode, the rotation of the camshaft 90B is transmitted to the camshaft 90A so that the camshaft 90A and camshaft 90B rotate in the direction of the arrow in Fig. 14A (counterclockwise). When a mode switch is made from the normal rotation drive mode to the swing drive mode, the output shaft of the motor 50H reverses and the oil in the oil path 79 is pressurized. The lock pin 74 is then disengaged from the hole 70 so that the camshaft 90B rotates clockwise relative to the camshaft 90A as viewed in Fig. 14A. When the stepped section 66D comes into contact with the stepped section 68D, the position of the hole 72 agrees with that of the lock pin 74 so that the force of the compression spring 76 inserts the lock pin 74 into the hole 72. The relative angular positions of the camshaft 90A and camshaft 90B are then set as shown in Fig. 14B.

When a mode switch is made from the swing drive mode to the normal rotation drive mode, the motor 50H is driven in such a direction that the camshaft 90B rotates counterclockwise as viewed in Fig. 14B to pressurize the oil in the oil path 79. The lock pin 74 is then disengaged from the hole 72. The camshaft 90B receives driving force from the motor 50H and rotates counterclockwise relative to the camshaft 90A as viewed in Fig. 14A. When the stepped section 66C comes into contact with the stepped section 68C, the position of the hole 70 agrees with that of the lock pin 74 so that the force of the compression spring 76 inserts the lock pin 74 into the hole 70. The relative angular positions of the camshaft 90A and camshaft 90B are then set as shown in Fig. 14A.

The same holds true for the camshaft 84, camshaft 86, and camshaft 88. When the intake valves 32 are driven in the swing drive mode, the relative position of the cam 64 is varied from the one in the normal rotation drive mode. The camshaft 84 is provided with a second-cylinder cam 64 and a fourth-cylinder cam 64, and the crankshaft rotates 270° between the intake stroke of the second cylinder and the intake stroke of the fourth cylinder. Therefore, when the ratio between the number of rotations of the camshaft 84 and the number of rotations of the crankshaft is 1:2, the camshaft 84 rotates 135° between the intake stroke of the second cylinder and the intake stroke of the fourth cylinder. Consequently, when the second-cylinder cam 64 is positioned 135° apart from the fourth-cylinder cam 64 in the normal rotation drive mode, the intake valves 32 can be opened/closed in accordance with the intake strokes of the second and fourth cylinders. Further, when, in the swing drive mode, the relative angular positions of the two camshafts constituting the camshaft 84 are changed so that the second-cylinder cam 64 is positioned 180° apart from the fourth-cylinder cam 64, the rotation amount of the camshaft 84 can be minimized in the swing drive mode. The other camshafts 86, 88 are similar to the camshaft 84 in the relative angular positions of the cams 64 in the normal rotation drive mode and in the relative angular positions of the cams 64 in the swing drive mode. As described above, the relative angular positions of the cams 64 in the normal rotation drive mode are greater for the camshaft 84, camshaft 86, and camshaft 88 than for the camshaft 90.

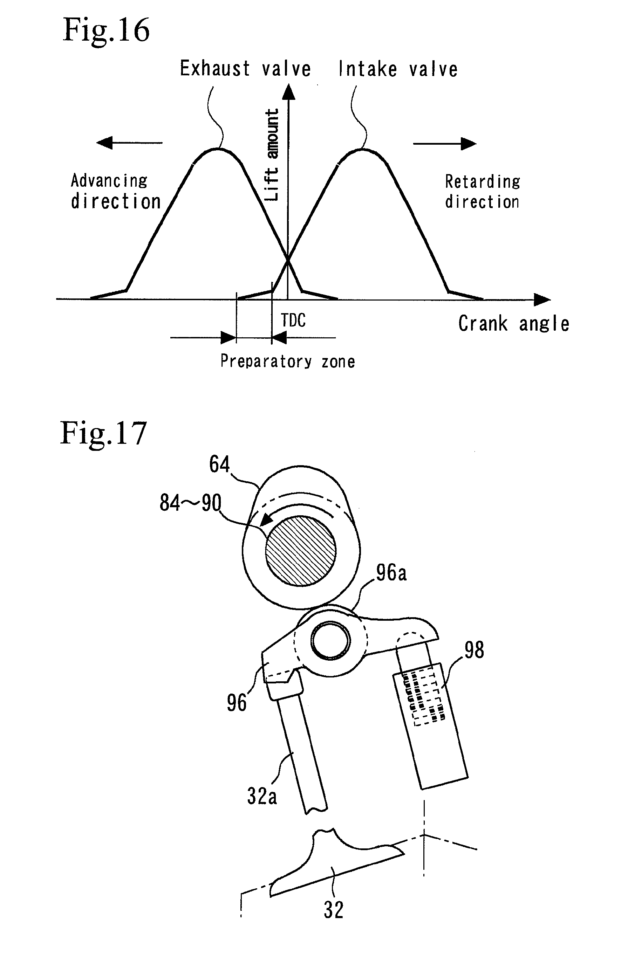

A method for avoiding a collision between the intake valves 32 and the piston 44 when the relative rotational positions of the camshaft 90A and camshaft 90B are changed will now be described. Fig. 16 is a schematic diagram illustrating the relationship between the lift amounts and crank angles of an intake valve 32 and exhaust valve 34. This figure shows the lift amounts of the intake valve 32 and exhaust valve 34 within a crank angle range between an exhaust stroke and intake stroke. When the crank angle progresses, the exhaust valve 34 first opens/closes during an exhaust stroke as shown in Fig. 16. Just before the crank angle reaches the top dead center (TDC) of the piston 44, the intake valve 32 starts opening to perform an intake stroke.

If the position at which the intake valve 32 is lifted advances toward the top dead center (toward the lift position of the exhaust valve 34) when the relative rotational positions of the camshaft 90A and camshaft 90B are changed in the manner described above, it is conceivable that the intake valve 32 may collide against the piston 44 when lifted. Therefore, when the relative rotational positions of the camshaft 90A and camshaft 90B are to be changed, it is preferable that the change retard the lift position of the intake valve 32. This ensures that the top dead center of the piston 44 is positioned apart from the lift position of the intake valve 32, and properly prevents the intake valve 32 from colliding against the piston 44.

When a mode switch is made from the normal rotation drive mode to the swing drive mode, the method described above rotates the camshaft 90B clockwise relative to the camshaft 90A as viewed in Fig. 14A. The rotation direction of the camshaft 90B is opposite to the direction of rotation in the normal rotation drive mode. Thus, the lift position of the intake valve 32 of the seventh cylinder retards. Therefore, even when the relative rotational positions of the camshaft 90A and camshaft 90B are changed, it is possible to properly prevent the intake valve 32 from interfering with the piston 44.

When a mode switch is made from the normal rotation drive mode to the swing drive mode, the first embodiment also rotates the camshaft 60B clockwise relative to the camshaft 60A as viewed in Fig. 7A. The rotation direction of the camshaft 60B is opposite to the direction of rotation in the normal rotation drive mode. Thus, the lift position of the intake valve 32 of the sixth cylinder retards. Therefore, even when the relative rotational positions of the camshaft 60A and camshaft 60B are changed, it is possible to properly prevent the intake valve 32 from interfering with the piston 44.

The valve mechanism 36 for driving the intake valve 32 is configured the same as the valve mechanism 38 for driving the exhaust valve 34. As regards the valve mechanism 38 for driving the exhaust valve 34, however, it is preferred that the relative rotational positions of the two camshafts be changed to prevent the lift position of the exhaust valve 34 from retarding toward the top dead center, that is, to advance the lift position of the exhaust valve 34. This makes it possible to properly prevent the exhaust valve 34 from interfering with the piston 44.

A method for minimizing the camshaft rotation angle for driving the intake valve 32 will now be described. The tappet clearance between the intake valve 32 and cam 64 can be adjusted in two ways. One method is to insert a shim or the like to make mechanical adjustments. The other method is to furnish a rocker arm supporting point with a hydraulic lash adjuster (HLA).

Fig. 17 is a schematic diagram illustrating an example in which a hydraulic lash adjuster is positioned at the supporting point of a rocker arm, which is used to drive the intake valve 32. As shown in Fig. 17, the end of the valve stem 32a of the intake valve 32 is in contact with a pivot that is mounted on one end of the rocker arm 96. The force of a valve spring (not shown) is exerted on the valve stem 32a so that the valve stem 32a pushes the rocker arm 96 upward. The other end of the rocker arm 96 is turnably supported by the hydraulic lash adjuster (HLA) 98. A roller 96a is positioned at the center of the rocker arm 96. Camshafts 84, 96, 88, 90 are installed above the roller 96a.

The hydraulic lash adjuster 98 provides automatic hydraulic adjustments of the vertical position of the rocker arm 96 to automatically adjust the tappet clearance or reduce it to zero. Therefore, the cam 64 on the camshafts 84-90 is in constant contact with the roller 96a as shown in Fig. 17.

When, on the other hand, a shim or the like is inserted to mechanically adjust the vertical position of the rocker arm 96, the clearance between the cam 64 and roller 96a cannot perfectly be reduced to zero. Therefore, when mechanical adjustments are to be made, it is necessary to rotate the camshafts 84-90 to an exceptional extent until the clearance is reduced to zero at the beginning of lifting, and provide a preparatory zone that precedes the beginning of lifting.

If, for instance, the tappet clearance of the intake valve 32 is mechanically adjusted, it is necessary to provide a preparatory zone at a crank angle position for the beginning of opening as shown in Fig. 16. Since the intake valve 32 begins to lift after the end of the preparatory zone, it is necessary to rotate the camshafts 84-90 to an exceptional extent for the preparatory zone when a mechanical adjustment method is used.

When the mechanical adjustment method is used as described above, the actual operating angle of the cam 64 is larger than when the hydraulic lash adjuster 98 is furnished. Therefore, the motor speed increases in the swing drive mode, thereby increasing the power consumption. Further, it is necessary to increase the phase angle between two cam noses by the amount of increase in the actual operating angle for the purpose of avoiding an overlap between the cam lift sections of two cams in the swing drive mode. This enlarges the rotation amount required for a cam change, raises the motor speed in the swing drive mode, and increases the power consumption.

When the employed mechanism includes the hydraulic lash adjuster 98, the preparatory zone is not needed because the tappet clearance is zero and the cam 64 is in constant contact with the roller 96a. Therefore, the operating angles of the camshafts 84-90 can be reduced by furnishing the hydraulic lash adjuster 98. This makes it possible to reduce the time required for an intake valve lift. Further, when the intake valve 32 is driven in the swing drive mode, it is possible to reduce the rotation angle for a cam change and the time required for such a change.

It is therefore preferable that the first and second embodiments reduce the operating angle of the cam 64 by adjusting the tappet clearance with the hydraulic lash adjuster 98. This not only increases the degree of freedom in varying the valve timing, but also reduces the drive amount of the motor 50. Consequently, the power consumption can be minimized.

If the tappet clearance is adjusted with the hydraulic lash adjuster in a situation where the employed mechanism does not use a rocker arm, that is, the acting force of the cam 64 directly works on the valve body 32, the inertia prevailing when the cam 64 drives the valve body 32 increases. Therefore, when the tappet clearance is to be adjusted with the hydraulic lash adjuster 98, it is preferred that the employed mechanism include the rocker arm 96 as shown in Fig. 17.

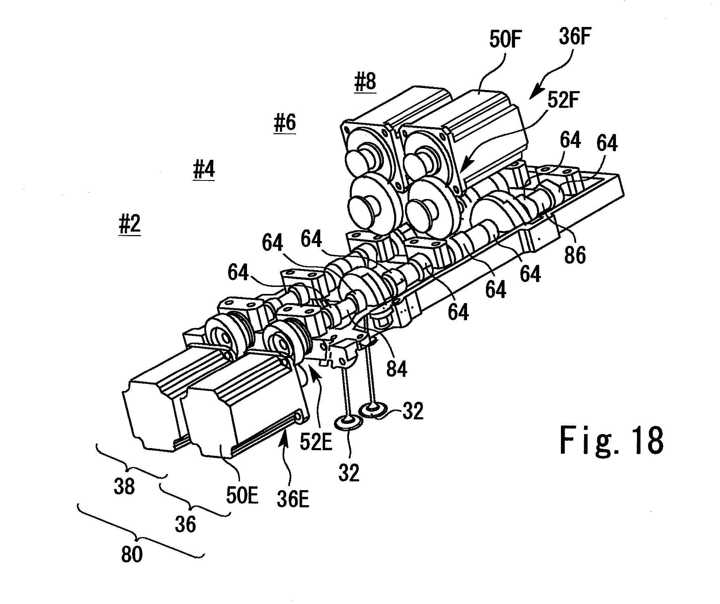

A method for changing the position of the motor 50 for the valve mechanism 36 in accordance with the drive scheme for a vehicle in which the internal combustion engine 10 is mounted will now be described with reference to Fig. 18. When the vehicle in which the internal combustion engine 10 is mounted is of a front-engine front-drive type, it is necessary to incline the bank when mounting the internal combustion engine 10 in an engine room. It is therefore preferred that the height of the internal combustion engine 10 be minimized. Consequently, when the internal combustion engine 10 is to be mounted in a front-engine front-drive vehicle, it is preferable that the height of the internal combustion engine 10 be minimized by positioning the motors 50A-50H at the ends of the camshafts 54-60, 84-90 as shown in Figs. 2 and 11. This makes it possible to lower the engine hood and reduce the air resistance of the vehicle.

Fig. 18 is a schematic diagram illustrating an example in which, in the bank 80 according to the second embodiment, the motor 50F for the valve mechanism 36F is positioned above the camshaft 86. In the example shown in Fig. 18, the cam drive gear 62 for the camshaft 86 is positioned at an end toward the camshaft 84. If the internal combustion engine 10 is mounted in a front-engine rear-drive vehicle, the internal combustion engine 10 is longitudinally mounted within the engine room. It is therefore preferred that the overall length of the internal combustion engine 10 be minimized. Consequently, when the internal combustion engine 10 is to be mounted in a front-engine rear-drive vehicle, it is preferable that the motor 50F be positioned above the camshaft 86 as shown in Fig. 18. This makes it possible to properly minimize the overall length of the internal combustion engine 10. It is also preferred that all motors 50E-50H be positioned above the camshafts 84-90. This makes it possible to minimize the overall length of the internal combustion engine 10. In the first embodiment, too, it is preferred that the motors 50A-50D be positioned above the camshafts 54-60 if the internal combustion engine 10 is to be mounted in a front-engine rear-drive vehicle.

As described above, when a V-type eight-cylinder internal combustion engine 10 drives the intake valves 32 of two cylinders with one camshaft 90 in the swing drive mode, the second embodiment varies the relative positions of the cams 64 from those in the normal rotation drive mode. Therefore, the rotation amount of the camshaft 90 for the swing drive mode can be reduced. This makes it possible to reduce the power consumption of the motor 50H, which drives the camshaft 90, and provide enhanced system efficiency.

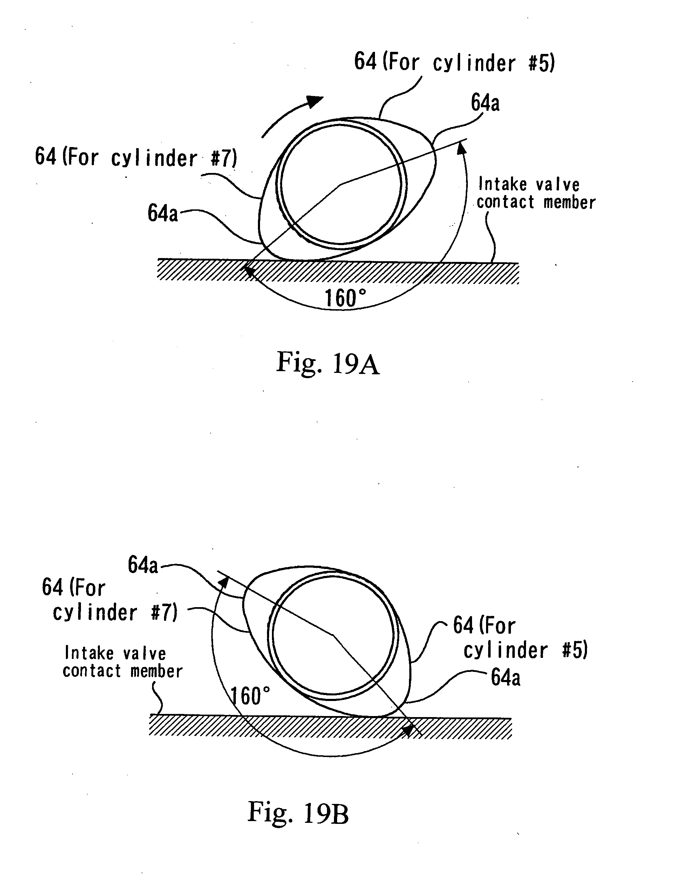

In the embodiments described above, the relative angular positions of the cams 64 for two cylinders in the swing drive mode are set so that the cams 64 are positioned 180° apart from each other. Alternatively, however, the relative angle between the two cams 64 may be smaller than 180° as far as the cam lift sections of the two cams 64 do not overlap in the swing drive mode. Figs. 19A and 19B illustrate examples in which the relative angle between the seventh-cylinder cam 64 and the fifth-cylinder cam, which are shown in Fig. 14B, is smaller than 180° (e.g., 160°). If, in this instance, the cam lift section angle range of the seventh-cylinder cam 64 does not overlap with that of the fifth-cylinder cam 64, the intake valves 32 of the seventh cylinder can be driven when swing drive is provided in the state shown in Fig. 19A. Further, when the camshaft 90 is rotated in the direction of the arrow in Fig. 19A to set the angular position of the camshaft 90 as shown in Fig. 19B after the intake valves 32 of the seventh cylinder are completely driven, the intake valves 32 of the fifth cylinder can be driven. In this instance, the rotation angle of the camshaft 90 for a change can be rendered smaller than when the relative angle between the seventh-cylinder cam 64 and the fifth-cylinder cam is set at 180°. Consequently, it is preferable that the relative angle between the cams for two cylinders in the swing drive mode be minimized without causing the cam lift sections to overlap.

### Third Embodiment

A third embodiment of the present invention will now be described. The third embodiment drives the intake valves 32 and exhaust valves 34 to properly control the oxygen occlusion amounts of the catalysts 42, 44 during a fuel cut-off operation.

In the system shown in Fig. 1, the oxygen occlusion amounts of the catalysts 42, 44 vary with the operating state of the internal combustion engine 10. When, for instance, control is exercised to provide a lean air-fuel ratio, the oxygen occlusion amounts of the catalysts 42, 44 increase due to an increase in the amount of oxygen in the exhaust. When, on the other hand, control is exercised to provide a rich air-fuel ratio, the oxygen occlusion amounts decrease because oxygen is released from the downstream catalysts 42, 44 due to an increase in the amount of reducing components in the exhaust.

Particularly when control is exercised to increase the amount of fuel for power increase or other similar purposes, the exhaust air-fuel ratio becomes rich and a large amount of oxygen is released from the catalysts 42, 44. Consequently, the catalysts 42, 44 are placed in a reduction condition so that the odor of catalysts may be emitted.

As such being the case, while the vehicle in which the internal combustion engine 10 is mounted decelerates, the present embodiment exercises control (fuel cut-off) to shut off the fuel supply from the fuel injection valve 30. While a fuel cut-off operation is being conducted, air flows from the intake path 12 to the exhaust path 14. Therefore, the catalysts 42, 44 adsorb oxygen in the air and minimize the possibility of allowing the odor of catalysts to be emitted. Further, increased fuel efficiency can be provided because no combustion occurs during fuel cut-off.

If the oxygen adsorption amounts of the catalysts 42, 44 are excessively large and the temperatures of the catalysts 42, 44 are high, the catalysts 42, 44 deteriorate. When the oxygen adsorption amounts of the catalysts 42, 44 are large, therefore, the present embodiment closes the exhaust valves 34 of all cylinders during fuel cut-off to stop the air flow to the exhaust path 14 and shut off the oxygen supply to the catalysts 42, 44. This makes it possible to prevent the amounts of oxygen supply to the catalysts 42, 44 from increasing excessively and properly suppress the deterioration of the catalysts 42, 44.

A fuel cut-off operation is mainly performed at the time of deceleration. Therefore, when the exhaust valves 34 of all cylinders are closed during fuel cut-off, the present embodiment opens predetermined intake valves 32 to perform proper pumping work and apply the engine brake during fuel cut-off driving.

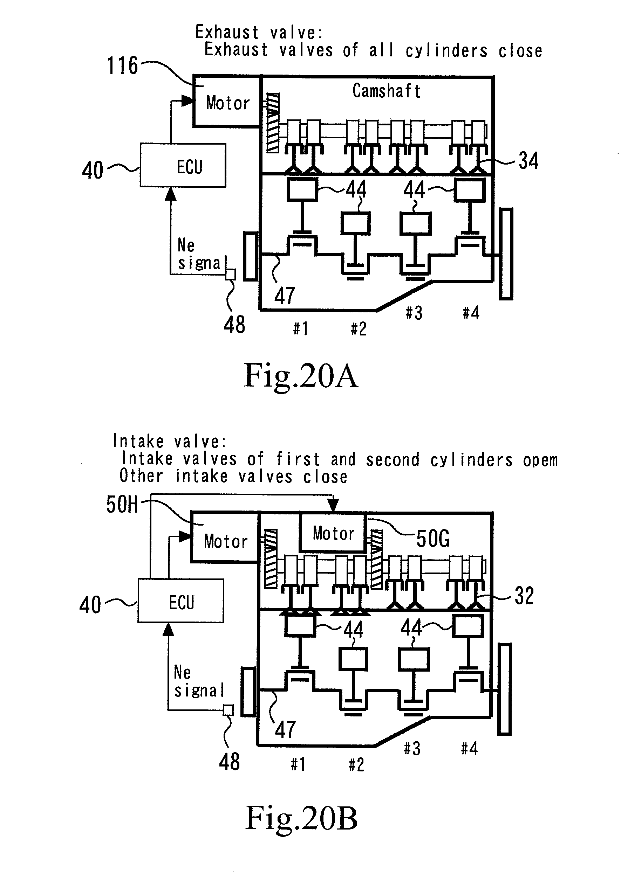

Figs. 20A and 20B are schematic diagrams illustrating how the present embodiment controls the intake valves 32 and exhaust valves 34. As shown in Figs. 20A and 20B, the internal combustion engine 10 according to the present embodiment includes four cylinders (first to fourth cylinders). The four cylinders are serially arranged. An explosion stroke is performed in the first, third, fourth, and second cylinders in the order named. Fig. 20A shows how the exhaust valves 34 are controlled during fuel cut-off. Fig. 20B shows how the intake valves 32 are controlled during fuel cut-off.

As shown in Fig. 20A, exhaust valve control is exercised so as to close the exhaust valves 34 of all cylinders during fuel cut-off. This makes it possible to stop the air flow to the exhaust path 14 and properly prevent the catalysts 42, 44 from deteriorating due to excessive oxygen supply. As shown in Fig. 20B, intake valve control is exercised so as to open only the intake valves 32 of the first and second cylinders. Pumping work can then be performed to exchange air between the first and second cylinders as described in detail later. Consequently, engine braking force can be generated while a fuel cut-off operation is performed for deceleration.

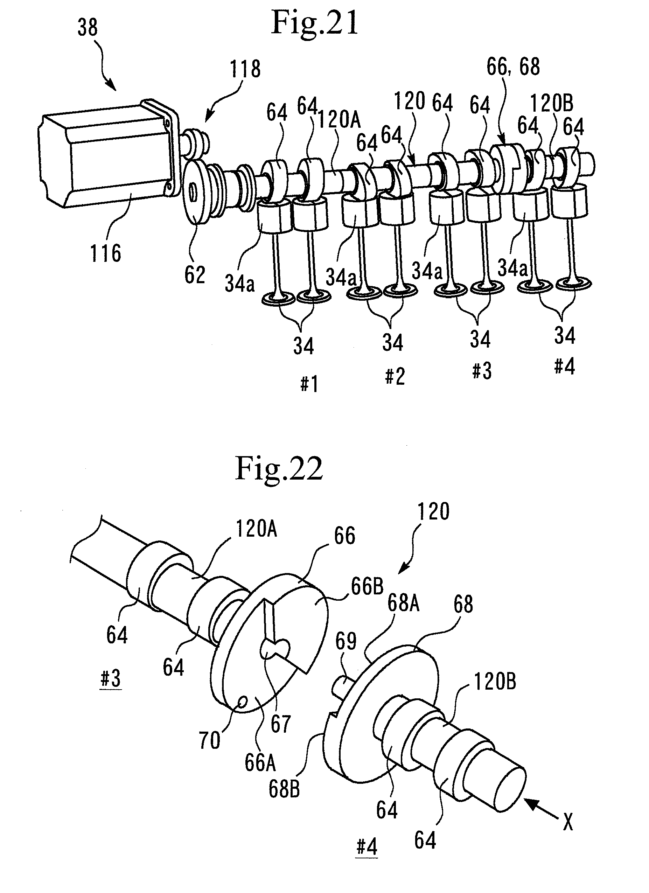

The above control processes, which are performed during fuel cut-off, will now be described in detail. First of all, the control process performed to close the exhaust valves 34 during fuel cut-off will be described. Fig. 21 is a schematic diagram illustrating the configuration of a section around the exhaust valves 34 and the valve mechanism 38 for driving the exhaust valves 34. The valve mechanism 38 drives the exhaust valves 38 of all cylinders (first to fourth cylinders). The configuration of the intake valves 32 and valve mechanism 36 will be described later. The third embodiment also assumes that each cylinder of the internal combustion engine 10 has two intake valves 32 and two exhaust valves 34.

The valve mechanism 38 includes a motor 116, which serves as a driving source, a gear train 118, which serves as a mechanism for transmitting the rotary motion of the motor 116, and a camshaft 120, which converts the rotary motion transmitted from the gear train to a linear open/close motion of the exhaust valves 34. The rotary motion of the motor 116 is transmitted to the camshaft 120 through the gear train 118.

As shown in Fig. 21, the camshaft 120 includes a camshaft 120A and a camshaft 120B. As shown in Fig. 21, the camshaft 120A is positioned above the exhaust valves 34 of the first, second, and third cylinders, and equipped with six cams 64 that drive the exhaust valves 34 of the first, second, and third cylinders. The camshaft 120B is positioned above the exhaust valves 34 of the fourth cylinder, and equipped with two cams 64 that drive the exhaust valves 34 of the fourth cylinder. As shown in Fig. 22, the periphery of the camshaft 120A is provided with a cam drive gear 62 that rotates together with the camshaft 120A.

As shown in Fig. 21, the upper end of each exhaust valve 34 is provided with a lifter 34a. Each cam 64 on the camshaft 120 comes into contact with the lifter 34a and pushes the lifter 34a downward to drive each exhaust valve 34.

Fig. 22 is a schematic diagram illustrating in detail the configuration of the camshaft 120. Like the camshaft 60 according to the first embodiment, the camshaft 120A has a flange section 66 at its end. Similarly, the camshaft 120B has a flange section 68 at its end. There is a hole 67 in the center of the flange section 66 of the camshaft 120A. The flange section 68 of the camshaft 120B has a shaft 69 that protrudes from the center of the flange section 68 toward the camshaft 120A. The camshaft 120A and camshaft 120B are unified as the shaft 69 turnably fits into the hole 67, thereby bringing the end face of the flange section 66 into contact with the end face of the flange section 68.

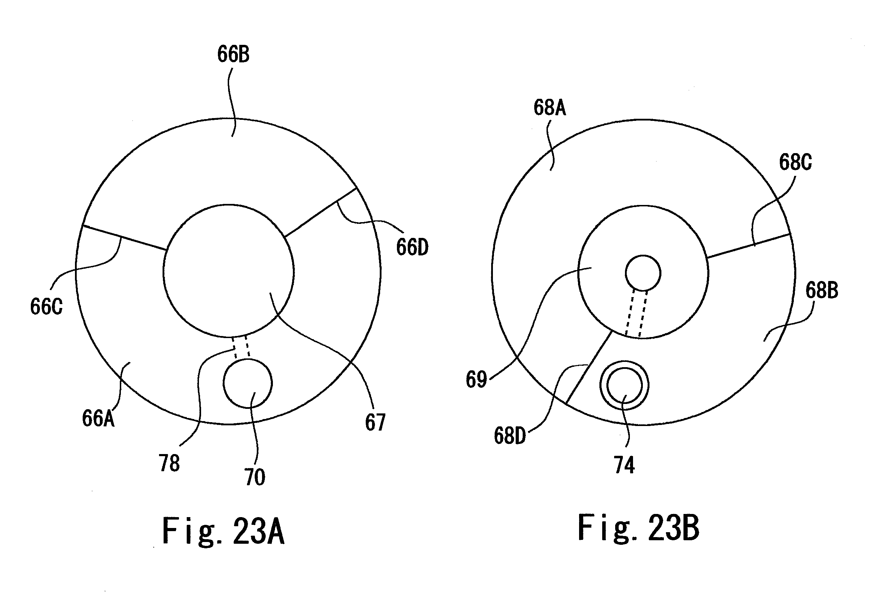

Figs. 23A and 23B are schematic diagrams illustrating the end faces of the flange sections 66, 68 that are provided for the camshaft 120A and camshaft 120B. Fig. 23A shows the end face of the flange section 66 of the camshaft 120A, whereas Fig. 23B shows the end face of the flange section 68 of the camshaft 120B.

The end faces of the flange sections 66, 68 are configured the same as the counterparts according to the first embodiment, which are described with reference to Figs. 6A and 6B. More specifically, the flange section 66 has a reference surface 66A and a protrusion surface 66B. The boundary between the reference surface 66A and protrusion surface 66B is provided with stepped sections 66C, 66D. Similarly, the flange section 68 has a reference surface 68A and a protrusion surface 68B. The boundary between the reference surface 68A and protrusion surface 68B is provided with stepped sections 68C and 68D. In the first and second embodiments, there are two holes 70, 72 in the reference surface 66A of the flange section 66. In the third embodiment, however, there is only one hole 70 in the reference surface 66A of the flange section 66. As shown in Fig. 23B, the protrusion surface 68B of the flange section 68 is provided with a lock pin 74. The lock pin 74 protrudes from the protrusion surface 68B toward the camshaft 120A.

If the lock pin 74 is not inserted into the hole 70 while the camshaft 120A and camshaft 120B are coupled together, the camshaft 120A and camshaft 120B can relatively rotate. When the lock pin 74 is inserted into the hole 70, the relative rotational positions of the camshaft 120A and camshaft 120B are locked.

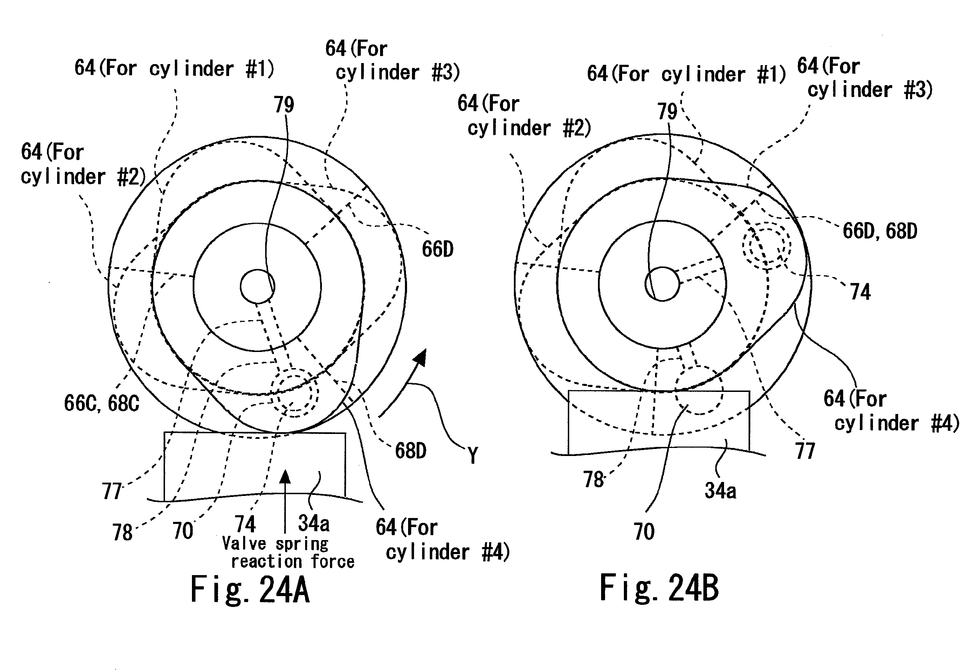

Figs. 24A and 24B are schematic diagrams that relate to a situation where the camshaft 120A and camshaft 120B are coupled together and illustrate the angular positions of the cams 64 on the camshaft 120A and the cams 64 on the camshaft 120B. Figs. 24A and 24B indicate that the lift of the fourth-cylinder exhaust valve 34 varies with the angular position of a cam 64 on the camshaft 120B. Figs. 24A and 24B are views of the camshaft 120 as taken in the direction of arrow X in Fig. 22. Fig. 24A shows a state in which the lock pin 74 in inserted into the hole 70. Fig. 24B shows a state in which the lock pin 74 is disengaged from the hole 70.

The state shown in Fig. 24A is set when the intake valve 32 is opened/closed during a normal operation (in the normal rotation drive mode or swing drive mode). In an inline four-cylinder internal combustion engine 10, an explosion stroke is performed in each cylinder at intervals of 180° crank angle. Since the camshaft 120 makes one revolution while the crankshaft makes two revolutions, the explosion stroke is performed in each cylinder each time the camshaft rotates 90°. Therefore, in a normal operating state in which the lock pin 74 is engaged with the hole 70, the cams 64 for the first, third, fourth, and second cylinders are arranged in the order named and at intervals of 90° as shown in Fig. 24A.

While the lock pin 74 is inserted into the hole 70 as shown in Fig. 24A, the stepped section 66C of the flange section 66 is in contact with the stepped section 68C of the flange section 68. Therefore, the rotational positions of the camshaft 120A and camshaft 120B are governed by the engagement between the lock pin 74 and hole 70, and their relative rotational positions in a direction in which the stepped section 66C comes into contact with the stepped section 68C are governed by the contact between the stepped section 66C and stepped section 68C.

In the state shown in Fig. 24A in which the cams 64 are positioned at intervals of 90°, the nose of the fourth-cylinder cam 64 on the camshaft 120B faces downward. Thus, the fourth-cylinder cam 64 pushes the retainer 34a for the exhaust valves 34 downward. Consequently, the exhaust valves 34 of the fourth cylinder are lifted by an amount that is smaller than the maximum lift amount. Meanwhile, the noses of the cams 64 for the other cylinders face sideways or upward so that the exhaust valves 34 of the other cylinders are closed.

Figs. 24B shows a state in which the lock pin 74 is disengaged from the hole 70 in the state shown in Fig. 24A and the camshaft 120B is rotated relative to the camshaft 120A. Since the mechanism for driving the lock pin 74 is configured the same as in the first and second embodiments, the lock pin 74 is driven in the same manner as described in conjunction with the first and second embodiments. More specifically, in the state shown in Fig. 24A, oil is supplied from the oil path 79 in the camshaft 120B to the oil path 77. In the state shown in Fig. 24A, the angular position of the oil path 77 agrees with that of the oil path 78 in the flange section 66. Therefore, the oil is supplied from the oil path 77 to the hole 70 through the oil path 78. As a result, the hole 70 is filled with the oil so that the lock pin 74 is hydraulically received. This makes it possible to disengage the lock pin 74 from the hole 70. Since the crankshaft 47 rotates even when a fuel cut-off operation is being performed, the oil can be supplied to the oil path 79 by driving an oil pump.

In the state shown in Fig. 24A, the exhaust valves 34 of the fourth cylinder are lifted by an amount that is smaller than the maximum lift amount, as described earlier. Therefore, the reaction force of a valve spring is applied to the exhaust valves 34 of the fourth cylinder in the valve closing direction (upward as viewed in Fig. 24A). When the lock pin 74 is disengaged from the hole 70 in this state, the rotation direction of the camshaft 120B is no longer restricted. The cam 64 for the fourth cylinder then receives upward force from the retainer 34a for the exhaust valves 34 and rotates in the direction of arrow Y in Fig. 24A. Consequently, the exhaust valves 34 of the fourth cylinder close.

Fig. 24B shows a state in which the camshaft 120B is further rotated after exhaust valve closure to bring the stepped section 66D into contact with the stepped section 68D. When the stepped section 66D is in contact with the stepped section 68D, the angular position of the third-cylinder cam agrees with that of the fourth-cylinder cam. In the state shown in Fig. 24A, the exhaust valves 34 of the first to third cylinders are already closed. Therefore, in the state shown in Fig. 24B in which the lock pin 74 is disengaged from the hole 70, the exhaust valves 34 of all cylinders (first to fourth cylinders) can be closed.

Therefore, when the camshaft 120 is stopped during fuel cut-off so that its angular position is as shown in Fig. 24A, the exhaust valves 34 of all cylinders can be closed by disengaging the lock pin 74 from the hole 70. This makes it possible to prevent an excessive amount of oxygen from being supplied to the catalysts 40, 42 and properly suppress catalyst deterioration at a high temperature.

The valve mechanism 38 may include two motors, which respectively control the camshaft 120A and camshaft 120B. In this case, too, the exhaust valves 34 of all cylinders can be closed by setting the angular positions of the camshafts 120A, 120B as shown in Fig. 24B.

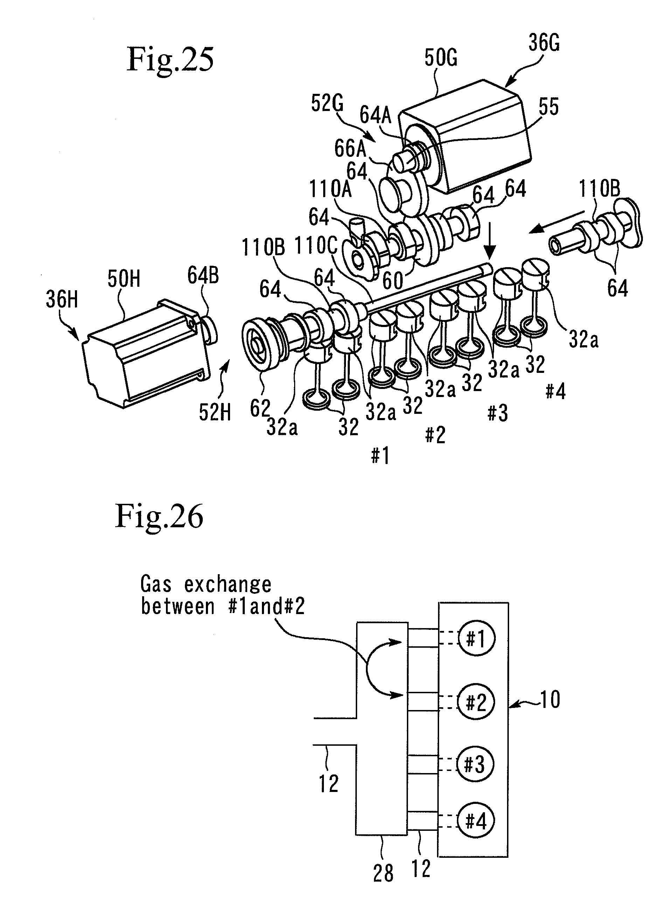

The control process performed as shown in Fig. 20B to open only predetermined intake valves 32 during fuel cut-off will now be described. Fig. 25 is a schematic diagram illustrating the configuration of a section around the intake valves 32 and the valve mechanism 36 for driving the intake valves 32. This figure mainly shows the configuration of a section around a cylinder head.

As shown in Fig. 25, the valve mechanism 36 includes two devices (valve mechanism 36G and valve mechanism 36H). The valve mechanism 36G drives the intake valves 32 of the second and third cylinders, whereas the valve mechanism 36H drives the intake valves 32 of the first and fourth cylinders.

As is the case with the first embodiment, the valve mechanisms 36G, 36H include motors 50G, 50H, respectively, as a driving source. The rotary motion of the motor 50G is transmitted to a camshaft 110A through a gear train 52G. Similarly, the rotary motion of the motor 50H is transmitted to a camshaft 110B through a gear train 52H.

As shown in Fig. 25, the camshaft 110A is positioned above the intake valves 32 of the second and third cylinders. Four cams on the camshaft 110A open/close the intake valves 32 of the second and third cylinders. The camshaft 110B is divided into two sections, which are positioned above the intake valves 32 of the first and fourth cylinders. Four cams 64 on the camshaft 110B open/close the intake valves 32 of the first and fourth cylinders. The two sections of the camshaft 110B rotate together because they are joined by a coupling member 110C that is inserted into a through-hole in the center of the camshaft 110. For convenience of explanation, Fig. 25 shows the camshaft 110A and the two sections of the camshaft 110B while they are separated from each other.

As shown in Fig. 25, the upper end of each intake valve 32 is provided with a lifter 32a. Each cam 64 on the camshafts 110A, 110B comes into contact with the lifter 32a and pushes the lifter 32a downward to drive each intake valve 32.

When the exhaust valves 34 of all cylinders are closed in the above manner in a situation where the intake valve side is configured as described above, the present embodiment opens only the intake valves 32 of the first and second cylinders by a predetermined amount by changing the relative angular positions of the camshaft 110A and camshaft 110B.

Gas exchange can then be made between the first and second cylinders to perform proper pumping work. In this instance, the intake valves 32 of the third and fourth cylinders close. However, it is preferred that the intake valves 32 of the third and fourth cylinders close when the pistons 44 of the third and fourth cylinders are positioned midway between the top dead center and bottom dead center. The exhaust valves 34 of the third and fourth cylinders are already closed. If the intake valves 32 close when a piston 44 is positioned close to the bottom dead center, the amount of air compressed when the piston 44 moves toward the top dead center increases to exhibit greater resistance. Similarly, if the intake valves 32 close when the piston 44 is positioned close to the top dead center, the negative pressure produced when the piston 44 moves toward the bottom dead center increases, thereby causing an increase in the resistance produced when the piston 44 moves toward the bottom dead center. Therefore, if the intake valves 32 close when the piston 44 is positioned midway between the top dead center and bottom dead center, the resistance produced when the piston 44 moves up and down can be minimized after intake valve closure. Since the third and fourth cylinders are 180° out of phase with each other, their pistons 44 are simultaneously positioned midway between the top dead center and bottom dead center.

Fig. 26 is a schematic diagram illustrating how gas is exchanged between the first and second cylinders. This figure is a top view of the internal combustion engine 10 and intake path 12. As shown in Fig. 26, the intake path 12 branches off downstream of the surge tank 28 and connects to all cylinders (first to fourth cylinders). Since the cylinders are connected via the surge tank 28, gas exchange can be made between the first and second cylinders when only the intake valves 32 of the first and second cylinders are opened with all the exhaust valves 34 closed.

In a four-cylinder internal combustion engine 10, an explosion stroke is performed in the first, third, fourth, and second cylinders in the order named at intervals of 180° crank angle as described earlier. Therefore, the first and second cylinders are 180 crank angle degrees out of phase with each other. Consequently, when the piston 44 of the first cylinder moves from the bottom dead center to the top dead center, the piston 44 of the second cylinder moves from the top dead center to the bottom dead center. In this instance, the exhaust valves 34 of all cylinders and the intake valves 32 of the first and second cylinders are closed. Therefore, the air expelled from the first cylinder due to an ascent of the piston 44 of the first cylinder flows backward within the intake path 12, reaches the surge tank 28, and is taken into the second cylinder due to a descent of the piston 44 of the second cylinder.

Similarly, when the piston 44 of the second cylinder moves from the bottom dead center to the top dead center, the air expelled from the second cylinder due to an ascent of the piston 44 flows backward within the intake path 12, reaches the surge tank 28, and is taken into the first cylinder due to a descent of the piston 44 of the first cylinder. Consequently, when only the intake valves 32 of the first and second cylinders, which are 180° out of phase with each other, are opened, gas exchange can be made between the first and second cylinders to perform pumping work.

In the above instance, the lift amount for the intake valves 32 of the first cylinder is made equal to the lift amount for the intake valves 32 of the second cylinder. This ensures that the air expelled from the first cylinder is taken into the second cylinder without excess or deficiency, and that the air expelled from the second cylinder is taken into the first cylinder without excess or deficiency. This prevents the amount of air expelled from one cylinder from exceeding the amount of air taken into the other cylinder, thereby inhibiting excess air from flowing backward toward the throttle valve 22. The above also prevents the amount of air taken into one cylinder from exceeding the amount of air expelled from the other cylinder, thereby inhibiting an unnecessary negative pressure from being generated in the intake path 12 due to intake amount insufficiency.

The amount of pumping work can be adjusted by changing the lift amounts of the intake valves 32 of the first and second cylinders while ensuring that they are equal. Decreasing the lift amounts for the intake valves 32 increases the resistance produced when air passes through the intake valves 32, thereby increasing the amount of pumping work. This provides increased engine braking force. On the other hand, increasing the lift amounts for the intake valves 32 decreases the resistance produced when air passes through the intake valves 32, thereby decreasing the amount of pumping work. This provides decreased engine braking force. Therefore, optimum engine braking force can be generated during fuel cut-off by controlling the lift amounts for the intake valves 32. This makes it possible to control the engine braking force by varying the lift amounts for the intake valves 32 in accordance, for instance, with the required vehicle speed level (e.g., the amount of brake pedal depression). Further, when deceleration ends, the amount of pumping work can be reduced to decrease the engine braking force by fully closing the intake valves 32 of the first and second cylinders and closing the intake valves 32 of all cylinders.

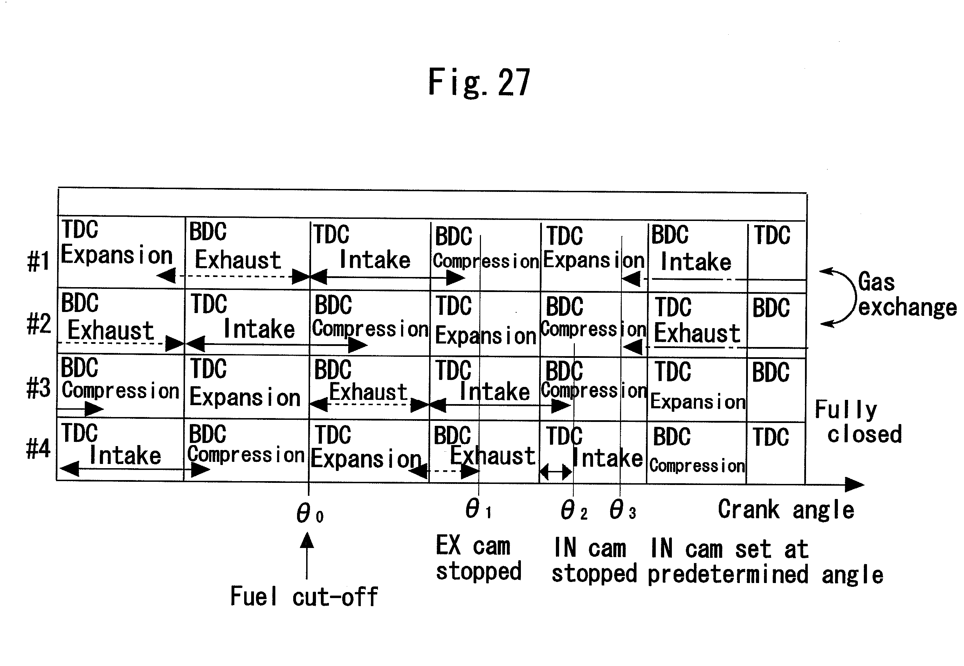

A method of controlling the aforementioned intake valves 32 and exhaust valves 34 will now be described with reference to a timing diagram in Fig. 27. The horizontal axis in Fig. 27 represents the crank angle. Fig. 27 shows the period during which the intake valves 32 of various cylinders (first to fourth cylinders) are open (indicated by solid lines in Fig. 27) and the period during which the exhaust valves 34 of various cylinders are open (indicated by broken lines in Fig. 26). In a four-cylinder internal combustion engine 10, an explosion stroke is performed in the first, third, fourth, and second cylinders in the order named. Therefore, the intake valves 32 and exhaust valves 34 of various cylinders open in a sequence that is indicated in Fig. 27.

In Fig. 26, the symbol θ0 represents a crank angle at which a fuel cut-off operation begins. After the fuel cut-off operation is started at crank angle θ0, the camshaft 120 for driving the exhaust valves 34 is stopped at crank angle θ1.

The position of crank angle θ1 corresponds to the position of the camshaft 120 that is shown in Fig. 24A. It is a crank angle position that prevails immediately after the lift of the fourth-cylinder exhaust valves 34 is maximized. More specifically, when the camshaft 120 is stopped at the position of crank angle θ1, the rotational position of the camshaft 120 is set as indicated in Fig. 24A so that the fourth-cylinder exhaust valves 34 are opened by a predetermined amount that is smaller than the maximum lift amount. Further, the exhaust valves 34 of the other cylinders (first to third cylinders) are all closed.

After the camshaft 120 is stopped at crank angle θ1, oil is supplied to the oil path 79 and forwarded to the hole 70. This drives the lock pin 74 and disengages the lock pin 74 from the hole 70.

The camshaft 120B can now rotate relative to the camshaft 120A. The camshaft 120B rotates in the direction of arrow Y in Fig. 24A due to the reaction force of valve springs for the fourth-cylinder exhaust valves 34. The relative angular positions of the camshaft 120A and camshaft 120B are then set as shown in Fig. 24B so that the exhaust valves 34 of the fourth cylinder close. Consequently, the exhaust valves 34 of all cylinders close.

When crank angle θ1 is reached, actual control is exercised so as to stop the camshaft 120 and drive the lock pin 74 at virtually the same time. Therefore, the camshaft 120B instantaneously rotates to the state shown in Fig. 24B. Consequently, the exhaust valves 34 of the fourth cylinder can be closed the moment crank angle θ1 is reached, as shown in Fig. 26.

Next, control is exercised to open the intake valves 32 of the first and second cylinders by a predetermined amount. As shown in Fig. 27, the intake valves 32 of the third cylinder are open at the position of crank angle θ1. Therefore, control is exercised to close the third-cylinder intake valves 32 at the position of crank angle θ2, which is shown in Fig. 27, and stop the rotation of the camshaft 110A.

Although the intake valves 32 of the fourth cylinder start a lift after crank angle θ1 is reached, control is exercised to close the intake valves 32 of the fourth cylinder at the position of crank angle θ2 and stop the rotation of the camshaft 110B. As described earlier, it is preferred that the intake valves 32 of the third and fourth cylinders close when the pistons 44 of the third and fourth cylinders are positioned midway between the top dead center and bottom dead center. This ensures that the intake valves 32 of all cylinders close after crank angle θ2 is reached.

When the crank angle increases by a predetermined amount from θ2 and reaches θ3, control is exercised to open the intake valves 32 of the first and second cylinders by a predetermined amount. More specifically, the intake valves 32 of the second cylinder are lifted by a predetermined amount by placing the camshaft 110A at a predetermined angular position after crank angle θ3 is reached. In this instance, it is possible to lift only the second-cylinder intake valves 32 because the second-cylinder and third-cylinder cams 64 on the camshaft 110A are 90° out of phase with each other.

After crank angle θ3 is reached, the camshaft 110B is set at a predetermined angular position to lift the first-cylinder intake valves 32 and second-cylinder intake valves 32 by the same amount. The two camshafts 110B are joined by the coupling member 110C and equipped with the first-cylinder cams 64 and fourth-cylinder cams 64. However, the first-cylinder cams 64 and fourth-cylinder cams 64 are 90° out of phase with each other. Therefore, it is possible to lift only the intake valves 32 of the first cylinder.

Consequently, only the intake valves 32 of the first and second cylinders can be opened by the same lift amount to perform pumping work and apply the engine brake.

When a fuel cut-off operation is terminated or when a normal operation is to be resumed during the fuel cut-off operation, the motor 116 drives the camshaft 120A for the exhaust valves 34. The camshaft 120A then rotates relative to the camshaft 120B. When the position of the lock pin 74 agrees with that of the hole 70, the acting force of the spring 76 inserts the lock pin 74 into the hole 70. The camshaft 120A and camshaft 120B are then unified. When the motor 116 drives the camshaft 120A and camshaft 120B, which are unified, a normal operation can be conducted in the normal rotation drive mode or swing drive mode.

As regards the intake valves 32, a normal operation can be conducted in the normal rotation drive mode or swing drive mode by normally driving the motor 38G and motor 38H.

As described above, the third embodiment can stop the air flow to the exhaust path 14 because it closes the exhaust valves 34 of all cylinders during fuel cut-off. This makes it possible to stop the supply of oxygen to the catalysts 42, 44, and avoid an excessive supply of oxygen to the catalysts 42, 44. Consequently, the deterioration of the catalysts 42, 44 can be properly suppressed.

Further, when the exhaust valves 34 of all cylinders are closed during fuel cut-off, the third embodiment opens, by a predetermined amount, only the intake valves 32 of two cylinders that are 180 crank angle degrees out of phase with each other. Therefore, gas exchange can be made between the two cylinders through the intake path 12 and surge tank 28. This makes it possible to perform appropriate pumping work and properly apply the engine brake during a fuel cut-off operation.

The third embodiment closes all exhaust valves 34 and opens only some intake valves 32 during fuel cut-off. However, an alternative is to close all intake valves 32 and open only some exhaust valves 34 during fuel cut-off. In this alternative case, too, it is possible to stop the air flow to the exhaust path 14 by closing all intake valves 32 and generate engine braking force by opening only some exhaust valves 34.

## Claims

1. A valve mechanism for an internal combustion engine that uses a motor to drive for opening/closing a valve body of each cylinder, the valve mechanism comprising:
a camshaft that is rotated by the motor and equipped with a plurality of cams for driving the valve body of a plurality of cylinders; and
cam angle change means for changing the relative angle between the plurality of cams that are driven by the same motor.

2. The valve mechanism according to claim 1, further comprising:
control means that drives the motor while making a mode switch between a normal rotation drive mode in which the camshaft is continuously rotated in one direction to drive the valve body and a swing drive mode in which the camshaft is swung to drive the valve body,
wherein the cam angle change means changes the relative angular positions of the cams when a mode switch is made.

3. The valve mechanism according to claim 2,
wherein the camshaft has the cams for driving the valve bodies of two cylinders and is formed by combining a first camshaft, which has a cam for one cylinder, and a second camshaft, which has a cam for the other cylinder; and
wherein the cam angle change means changes the relative angular positions of the cam on the first camshaft and the cam on the second camshaft by changing the relative angular positions of the first camshaft and the second camshaft.

4. The valve mechanism according to claim 3, further comprising:
angle lock means that is provided at a junction between the first camshaft and the second camshaft to lock the relative angular positions of the first camshaft and the second camshaft in the normal rotation drive mode and in the swing drive mode, respectively.

5. The valve mechanism according to claim 4,
wherein the angle lock means includes a lock pin, which is provided for one of the first camshaft and the second camshaft, and a first engagement hole and a second engagement hole, which are made in the other of the first camshaft and the second camshaft to engage with the lock pin;
wherein, in the normal rotation drive mode, the lock pin engages with the first engagement hole to lock the relative angular positions of the first camshaft and the second camshaft; and
wherein, in the swing drive mode, the lock pin engages with the second engagement hole to lock the relative angular positions of the first camshaft and the second camshaft.

6. The valve mechanism according to claim 5, further comprising:
lock pin disengagement means that supplies oil to the first or second engagement hole to disengage the lock pin from the first or second engagement hole,
wherein the lock pin disengagement means includes an oil path that communicates with either the first engagement hole or the second engagement hole in accordance with the relative angular positions of the first camshaft and the second camshaft;
wherein, in the normal rotation drive mode, the oil path communicates with only the first engagement hole, and when a mode switch is to be made to the swing drive mode, oil is supplied to the oil path to disengage the lock pin from the first engagement hole; and
wherein, in the swing drive mode, the oil path communicates with only the second engagement hole, and when a mode switch is to be made to the normal rotation drive mode, oil is supplied to the oil path to disengage the lock pin from the second engagement hole.

7. The valve mechanism according to any one of claims 2 to 6, wherein the valve body is an intake valve, and when a mode switch is made from the normal rotation drive mode to the swing drive mode, the valve opening timing of the valve body retards.

8. The valve mechanism according to any one of claims 2 to 6, wherein the valve body is an exhaust valve, and when a mode switch is made from the normal rotation drive mode to the swing drive mode, the valve opening timing of the valve body advances.

9. The valve mechanism according to any one of claims 2 to 8, further comprising:
a hydraulic lash adjuster for adjusting the clearance between the valve body and the cam.

10. The valve mechanism according to claim 9, further comprising:
a rocker arm for transmitting the acting force of the cam to the valve body.

11. The valve mechanism according to any one of claims 2 to 10, wherein the motor is positioned at a longitudinal end of the camshaft.

12. The valve mechanism according to any one of claims 2 to 10, wherein the motor is positioned above the camshaft.

13. The valve mechanism according to claim 1,
wherein the internal combustion engine performs a fuel cut-off operation at the time of vehicle deceleration; and
wherein, when the fuel cut-off operation is performed, the cam angle change means changes the relative angular positions of the cams so as to close the valve bodies of all cylinders.

14. The valve mechanism according to claim 13,
wherein the camshaft includes an intake valve camshaft for driving intake valves and an exhaust valve camshaft for driving exhaust valves; and
wherein, when the fuel cut-off operation is performed, the cam angle change means changes the relative angular positions of the cams on at least either the intake valve camshaft or the exhaust valve camshaft so as to close the valve bodies of all cylinders.

15. The valve mechanism according to claim 14,
wherein, when the fuel cut-off operation is performed, the cam angle change means changes the relative angular positions of the cams on one of the intake valve camshaft and the exhaust valve camshaft so as to close the valve bodies of all cylinders and changes the relative angular positions of the cams on the other of the intake valve camshaft and the exhaust valve camshaft so as to open only the valve bodies of some of the all cylinders.

16. The valve mechanism according to claim 15,
wherein, when the fuel cut-off operation is performed, the cam angle change means changes the relative angular positions of the cams on the exhaust valve camshaft so as to close the valve bodies of all cylinders and changes the relative angular positions of the cams on the intake valve camshaft so as to open only the valve bodies of some of the all cylinders.

17. The valve mechanism according to claim 15 or 16,
wherein the some of the all cylinders are two cylinders in which pistons move in opposite directions.

18. The valve mechanism according to claim 15 or 16,
wherein the some of the all cylinders are two cylinders that are 180 crank angle degrees out of phase with each other.

19. The valve mechanism according to claim 17 or 18,
wherein the cam angle change means changes the relative angular positions of the cams so that the two cylinders open the valve bodies by the same amount.

20. The valve mechanism according to any one of claims 15 to 19, wherein the cam angle change means changes the amount of valve body opening in accordance with a requested vehicle speed level of a vehicle in which the internal combustion engine is mounted.
